# EUROPEAN PATENT APPLICATION

(11) **EP 4 507 452 A1**
(43) Date of publication of application: **12.02.2025**
(21) Application number: 23785021.9
(22) Date of filing: 06.04.2023
(51) Int. Cl.: H04W 88/04, H04W 76/28, H04W 68/02, H04W 4/40, H04W 92/18

(54) **APPARATUS AND METHOD FOR SUPPORTING DISCONTINUOUS RECEPTION MODE OPERATION IN SIDELINK-BASED RELAY COMMUNICATION IN WIRELESS COMMUNICATION SYSTEM**

(30) Priority: 08.04.2022 KR 20220044015
(71) Applicant: Samsung Electronics Co., Ltd., Suwon-si, Gyeonggi-do 16677 (KR)
(72) Inventor: KANG, Hyunjeong, Suwon-si, Gyeonggi-do 16677 (KR); AGIWAL, Anil, Suwon-si, Gyeonggi-do 16677 (KR)
(74) Representative: Gulde & Partner
(86) International application number: PCT/KR2023/004662
(87) International publication number: WO 2023/195797

(57) **Abstract**

The present disclosure relates to a 5G or 6G communication system for supporting higher data transmission rates. A method for operating a sidelink relay in a wireless communication system according to an embodiment of the present disclosure comprises the steps of: receiving, from a terminal, a first message including assistance information relating to a sidelink discontinuous reception mode (DRX) between the sidelink relay and the terminal; and transmitting, to the terminal, a second message including configuration information relating to the sidelink discontinuous reception mode. The assistance information included in the first message may include at least one of a sidelink DRX cycle, sidelink timer information, and a sidelink start offset, which are preferred by the terminal.

## Description

### [Technical Field]

The disclosure relates to a wireless communication system. More particularly, the disclosure relates to a method and an apparatus for supporting a sidelink discontinuous reception mode between a sidelink relay and a remote terminal when performing communication between remote terminals or between a remote terminal and a network through a sidelink relay in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Also, device-to-device direct communication (sidelink communication) using the 5G communication system has been studied, and it is expected that the sidelink communication may be applied to vehicle communication (vehicle-to everything, hereinafter "V2X") and public safety networks to provide various services to users.

In particular, there is a need for sidelink relay utilization schemes which can support service coverage extensions, data transfer reliability increases, and terminal power consumption reductions.

### [Detailed Description of the Invention]

### [Technical Problem]

The disclosure may provide a method for performing a sidelink discontinuous reception mode (DRX) by a terminal and a sidelink relay when a terminal performs communication with another terminal through a sidelink relay in a wireless communication system, or when a terminal performs communication with a network through a sidelink relay.

The technical subjects pursued in the disclosure may not be limited to the above - mentioned technical subjects, and other technical subjects which are not mentioned may be clearly understood, through the following descriptions, by those skilled in the art to which the disclosure pertains.

### [Technical Solution]

A method for operating a sidelink relay in a wireless communication system according to an embodiment of the disclosure may include receiving a first message including assistance information regarding a sidelink DRX between the sidelink relay and a terminal from the terminal, and transmitting a second message including configuration information regarding the sidelink DRX to the terminal. The assistance information included in the first message may include at least one of a sidelink DRX cycle preferred by the terminal, sidelink timer information, and a sidelink start offset.

According to an embodiment, the configuration information included in the second message may include at least one of a DRX on-duration timer, a DRX inactivity timer, a DRX HARQ RTT timer, a DRX retransmission timer, a sidelink DRX cycle, a DRX start offset, and a DRX slot offset.

A method for operating a terminal in a wireless communication system according to an embodiment of the disclosure may include transmitting a first message including assistance information regarding a sidelink DRX between the terminal and a sidelink relay to the sidelink relay, and receiving a second message including configuration information regarding the sidelink DRX from the sidelink relay. The assistance information included in the first message may include at least one of a sidelink DRX cycle preferred by the terminal, sidelink timer information, and a sidelink start offset.

A sidelink relay in a wireless communication system according to an embodiment of the disclosure includes a communication unit and a controller. The controller may control a first message including assistance information regarding a sidelink DRX between the sidelink relay and a terminal to be received from the terminal, and control a second message including configuration information regarding the sidelink DRX to be transmitted to the terminal. The assistance information included in the first message may include at least one of a sidelink DRX cycle preferred by the terminal, sidelink timer information, and a sidelink start offset.

A terminal in a wireless communication system according to an embodiment of the disclosure may include a communication unit and a controller. The controller may control a first message including assistance information regarding a sidelink DRX between the terminal and a sidelink relay to be transmitted to the sidelink relay, and control a second message including configuration information regarding the sidelink DRX to be received from the sidelink relay. The assistance information included in the first message may include at least one of a sidelink DRX cycle preferred by the terminal, sidelink timer information, and a sidelink start offset.

A method for operating a sidelink DRX with a sidelink relay by a remote terminal in a wireless communication system according to an embodiment of the disclosure may include acquiring, by the remote terminal, DRX configuration information with the sidelink relay from a base station or acquiring DRX configuration information from the sidelink relay, and transmitting, by the remote terminal, assistance information of a sidelink DRX configuration to the base station or transmitting assistance information of a sidelink DRX configuration to the sidelink relay. The assistance information of a sidelink DRX configuration transmitted by the remote terminal may be at least one of a preferred DRX cycle, a preferred DRX start offset, and a preferred DRX inactivity timer. The preference information may be configured in consideration of at least one of a paging monitoring interval of the remote terminal, a downlink traffic transmission pattern, and an uplink traffic transmission pattern.

According to an embodiment of the disclosure, a method for operating a sidelink DRX with a remote terminal by a sidelink relay in a wireless communication system may include acquiring, by the sidelink relay, DRX configuration information from the remote terminal or acquiring DRX configuration information with the remote terminal from a base station, and transmitting, by the sidelink relay, assistance information of a sidelink DRX configuration to the base station or transmitting assistance information of a sidelink DRX configuration to the remote terminal.

According to an embodiment, the assistance information of a sidelink DRX configuration transmitted by the sidelink relay may include at least one of a preferred DRX cycle, a preferred DRX start offset, and a preferred DRX inactivity timer. According to an embodiment, the preference information may be configured in consideration of at least one of the sidelink relay's Us DRX configuration information (cycle, start offset, inactivity timer, and the like), and the paging monitoring interval of the remote terminal monitored by the sidelink relay.

### [Advantageous Effects]

According to an embodiment of the disclosure, a service may be provided effectively to a terminal through a sidelink relay in a wireless communication system, and the service coverage may be expanded.

Advantageous effects obtainable from the disclosure may not be limited to the above - mentioned effects, and other effects which are not mentioned may be clearly understood, through the following descriptions, by those skilled in the art to which the disclosure pertains.

### [Brief Description of Drawings]

FIG. 1A illustrates a wireless communication system according to an embodiment of the disclosure.
FIG. 1B illustrates a wireless communication system according to an embodiment of the disclosure.
FIG. 2 illustrates the configuration of a base station in a wireless communication system according to an embodiment of the disclosure.
FIG. 3 illustrates the configuration of a relay or a terminal in a wireless communication system according to an embodiment of the disclosure.
FIG. 4 illustrates the configuration of a communication unit in a wireless communication system according to an embodiment of the disclosure.
FIG. 5 illustrates the structure of a time-frequency resource of a wireless communication system according to an embodiment of the disclosure.
FIG. 6A and FIG. 6B illustrate a procedure in which a remote terminal and a sidelink relay configure a discontinuous reception mode according to an embodiment of the disclosure.
FIG. 7A, FIG. 7B, and FIG. 7C illustrate a procedure in which a remote terminal and a sidelink relay configure a discontinuous reception mode according to an embodiment of the disclosure.
FIG. 8A and FIG. 8B illustrate a procedure in which a remote terminal and a sidelink relay configure a discontinuous reception mode according to an embodiment of the disclosure.
FIG. 9A and FIG. 9B illustrate a procedure in which a remote terminal and a sidelink relay configure a discontinuous reception mode according to an embodiment of the disclosure.
FIG. 10 illustrates a procedure in which a remote terminal and a sidelink relay configure a discontinuous reception mode according to an embodiment of the disclosure.

### [Mode for Carrying out the Invention]

Hereinafter, exemplary embodiments of the disclosure will be described in detail with reference to the accompanying drawings. It should be noted that, in the accompanying drawings, the same or like elements are designated by the same or like reference signs as much as possible numerals. Also, a detailed description of known functions or configurations that may make the subject matter of the disclosure unnecessarily unclear will be omitted.

In describing the embodiments in the specification, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

The following detailed description of embodiments of the disclosure is mainly directed to New RAN (NR) as a radio access network and Packet Core (5G system or 5G core network or next generation core (NG Core)) as a core network in the 5G mobile communication standards specified by the 3rd generation partnership project (3GPP) that is a mobile communication standardization group, but based on determinations by those skilled in the art, the main idea of the disclosure may be applied to other communication systems having similar backgrounds through some modifications without significantly departing from the scope of the disclosure.

In the 5G system, a network data collection and analysis function (NWDAF), which is a network function for analyzing and providing data collected in a 5G network, may be defined to support network automation. The NWDAF may collect/store/analyze information from the 5G network and provide the results to unspecified network functions (NFs), and the analysis results may be used independently in each NF.

In the following description, some of terms and names defined in the 3GPP standards (standards for 5G, NR, LTE, or similar systems) may be used for the sake of descriptive convenience. However, the disclosure is not limited by these terms and names, and may be applied in the same way to systems that conform other standards.

Hereinafter, the disclosure relates to a method and an apparatus for configuring a sidelink discontinuous reception mode between a sidelink relay and a sidelink-based remote terminal in a wireless communication system. The disclosure provides a method and an apparatus for supporting a sidelink discontinuous reception mode in case that a remote terminal performs communication with another remote terminal through a sidelink relay in a wireless communication system, and in case that a remote terminal performs communication with a network through a sidelink relay.

Particularly, the disclosure provides a method wherein a remote terminal transmits sidelink discontinuous reception mode assistance information to a sidelink relay or a base station, and the remote terminal acquires information regarding a sidelink discontinuous reception mode configuration with the sidelink relay from the sidelink relay or the base station.

The disclosure provides a method wherein a sidelink relay transmits sidelink discontinuous reception mode assistance information to a remote terminal or a base station, and the sidelink relay acquires information regarding a sidelink discontinuous reception mode configuration with the remote terminal from the remote terminal or the base station. According to an embodiment of the disclosure, the service coverage may be expanded through direct communication between a terminal and a sidelink relay or another terminal, the reliability of data transmission/reception may be improved, and the terminal's battery use may be minimized.

In the following description, terms referring to signals, terms referring to channels, terms referring to control information, terms referring to network entities, terms referring to device elements, and the like are illustratively used for the sake of descriptive convenience. Therefore, the disclosure is not limited by the terms as used herein, and other terms referring to subjects having equivalent technical meanings may be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. However, they are merely examples thereof, and the base station and the terminal are not limited to these examples. In the disclosure, the term "eNB" may be interchangeably used with the term "gNB" for the sake of descriptive convenience. That is, a base station described as "eNB" may indicate "gNB". In the disclosure, the term "terminal" may refer to mobile phones, NB-IoT devices, sensors, and various wireless communication devices.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

Furthermore, as used in the disclosure, the expression "greater than" or "less than" is used to determine whether a specific condition is satisfied or fulfilled, but this is intended only to illustrate an example and does not exclude "greater than or equal to" or "equal to or less than". A condition indicated by the expression "greater than or equal to" may be replaced with a condition indicated by "greater than", a condition indicated by the expression "equal to or less than" may be replaced with a condition indicated by "less than", and a condition indicated by "greater than and equal to or less than" may be replaced with a condition indicated by "greater than and less than".

Furthermore, the embodiments of the disclosure will be described using terms employed in some communication standards (e.g., the 3rd generation partnership project (3GPP)), but they are for illustrative purposes only. The embodiments of the disclosure may be easily applied to other communication systems through modifications.

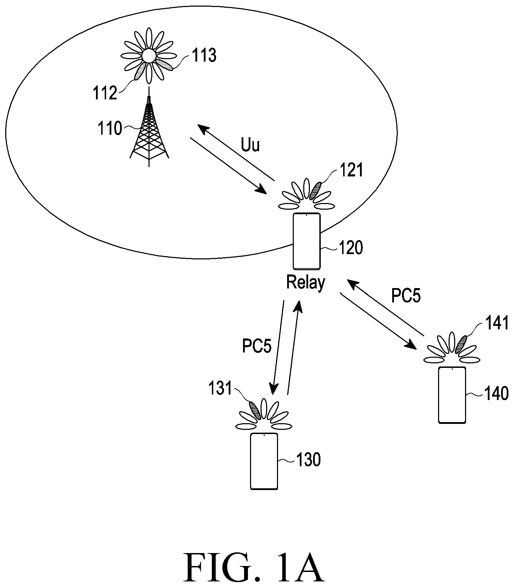

FIG. 1A illustrates a wireless communication system according to an embodiment of the disclosure.

FIG. 1A illustrates a base station 110, terminals 130 and 140, and a sidelink relay 120 capable of relaying data transmission/reception between the base station and the terminals, as a part of nodes using a radio channel in a wireless communication system. The sidelink relay corresponds to a UE-to-network (U2N) relay. Although only one base station is illustrated in FIG. 1A, base stations identical or similar to the base station 110 may be further included.

The base station 110 is a network infrastructure configured to provide radio access to the terminals 130 and 140 and the relay 120. The base station 110 has a coverage defined as a predetermined geographical area, based on a signal transmission distance. In addition to "base station", the base station 110 may also be referred to as "access point (AP)", "eNodeB (eNB)", "5^{th} generation (5G) node", "next generation nodeB (gNB)", "wireless point", "transmission/reception point (TRP)", or other terms having equivalent technical meanings.

The relay 120 may be used by the user or network infrastructure so as to perform communication with the base station 110 through a radio channel. The link directed from the base station 110 to the relay 120 may be referred to as a downlink (DL), and the link directed from the relay 120 to the base station 110 may be referred to as an uplink (UL). The base station 110 and the relay 120 may be connected through a Uu interface. The uplink (UL) refers to a radio link through which the relay 120 transmits data or control signals to the base station 110, and the downlink (DL) refers to a radio link through which the base station 110 transmits data or control signals to the relay 120.

The relay 120 may perform communication with the terminal 130 and the terminal 140 through a radio channel. The link between the relay 120 and the terminal 130 and the link between the relay 120 and the terminal 140 are referred to as sidelinks, which may be referred to as PC5 interfaces.

Each of the terminals 130 and 140 may be a device used by the user so as to perform communication with the base station 110 through a radio channel or to perform communication with a network through a radio channel with the relay 120. The disclosure illustrates only a case in which each of the terminal 130 and the terminal 140 performs communication with the relay 120 through a radio channel. Each of the terminal 130 and the terminal 140 may be operated without the user's intervention. That is, at least one of the terminal 130 and the terminal 140 may be a device configured to perform machine-type communication (MTC), and may not be carried by the user. In addition to "terminal", each of the terminal 130 and the terminal 140 may also be referred to as "user equipment (UE)", "mobile station", "subscriber station", "remote terminal", "wireless terminal", "user device", or other terms having equivalent technical meanings.

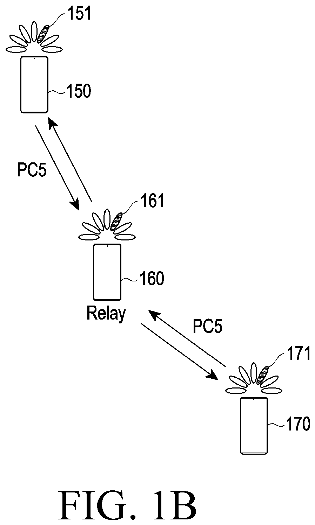

FIG. 1B illustrates a wireless communication system according to an embodiment of the disclosure.

FIG. 1B illustrates a wireless communication system including terminals 150 and 170 and a sidelink relay 160 capable of relaying data transmission/reception between the terminals, as a part of nodes using a radio channel in a wireless communication system. The sidelink relay 160 corresponds to a UE-to-UE (U2U) relay.

The relay 160 may perform communication with the terminal 150 and the terminal 170 through a radio channel. The link between the relay 160 and the terminal 150 and the link between the relay 160 and the terminal 170 are referred to as sidelinks, which may be referred to as PC5 interfaces.

Each of the terminals 150 and 170 may be a device used by the user so as to perform direct communication through a radio channel or to perform communication with the counterpart terminal through a radio channel with the relay 160. The link between the terminal 150 and the terminal 170, the link between the terminal 150 and the relay 160, and the link between the terminal 170 and the relay 160 are referred to as sidelinks, which may be referred to as PC5 interfaces.

At least one of the terminal 150 and the terminal 170 may be operated without the user's intervention. That is, at least one of the terminal 150 and the terminal 170 may be a device configured to perform machine-type communication (MTC), and may not be carried by the user. In addition to "terminal", each of the terminal 150 and the terminal 170 may also be referred to as "user equipment (UE)", "mobile station", "subscriber station", "remote terminal", "wireless terminal", "user device", or other terms having equivalent technical meanings.

In the following description, the uplink or downlink, the Uu interface, the sidelink, and PC-5 may be used interchangeably.

The base station 110, the relays 120 and 160, and the terminals 130, 140, 150, and 170 illustrated in FIG. 1A and FIG. 1B may transmit and receive radio signals in mmWave bands (for example, 28GHz, 30GHz, 38GHz, 60GHz). In order to improve the channel gain, the base station 110, the relays 120 and 160, and the terminals 130, 140, 150, and 170 may perform beamforming. The beamforming may include transmission beamforming and reception beamforming. That is, the base station 110, the relays 120 and 160, and the terminals 130, 140, 150, and 170 may give directivity to transmitted or received signals.

To this end, the base station 110, the relays 120 and 160, and the terminals 130, 140, 150, and 170 may select serving beams 112, 113, 121, 131, 141, 151, 161, and 171 through a beam search or beam management procedure. After the serving beams 112, 113, 121, 131, 141, 151, 161, and 171 are selected, communication may be performed through resources having a quasi co-located (QCL) relation with resources used to transmit the serving beams 112, 113, 121, 131, 141, 151, 161, and 171.

If large-scale characteristics of a channel used to transfer a symbol on a first antenna port can be inferred from a channel used to transfer a symbol on a second antenna port, the first and second antenna ports may be deemed to have the QCL relation. For example, the large-scale characteristics may include at least one of delay spread, doppler spread, doppler shift, average gain, average delay, and spatial receiver parameter.

The terminals 130, 140, 150, and 170 illustrated in FIG. 1A and FIG. 1B may support vehicle communication. In the case of vehicle communication, standardizations regarding vehicle-to-everything (V2X) technology have been completed in 3GPP Release 14 and Release 15, based on device-to-device (D2D) communication structures, in LTE systems, and standardizations regarding V2X technology have been completed in 3GPP Release 16, based on 5G NR. NR V2X supports UE-to-UE unicast communication, groupcast (or multicast) communication, and broadcast communication. In addition, unlike LTE V2X which aims to transmit/receive basic safety information necessary for vehicles traveling on roads, NR V2X is aimed at providing more advanced services such as platooning, advanced driving, extended sensors, and remote driving. V2X services may be classified into basic safety services and advanced services. The basic safety services may include detailed services such as a vehicle notification (cooperative awareness messages (CAM) or basic safety message (BSM)) service, a left turn notification service, a front vehicle rear-end collision warning service, an emergency vehicle approach notification service, a front obstacle warning service, and an intersection signal information service, and V2X information may be transmitted/received by using a broadcast or unicast or group cast transmission scheme. The advanced services not only have enhanced requirements regarding the quality of service (QoS) compared with the basic safety services, but also require schemes capable of transmitting/receiving V2X information by using unicast and groupcast transmission schemes, besides broadcast schemes, such that V2X information can be transmitted/received inside a specific vehicle group, or V2X information can be transmitted/received between two vehicles. The advanced services may include detailed services such as a platooning service, an autonomous driving service, a remote driving service, and an extended sensor-based V2X service. In addition, NR V2X may support a direct communication service between terminals in an area having no infrastructure, thereby providing a public safety service.

Hereinafter, a sidelink (SL) refers to a path of signal transmission/reception between terminals or a path of signal transmission/reception between a terminal and a relay, and may be used interchangeably with "PC5 interface". Hereinafter, a base station refers to an entity configured to allocate resources of a terminal and a relay, and may support both V2X communication and legacy cellular communication or may support V2X communication only. That is, a base station may refer to an NR base station (for example, gNB), an LTE base station (for example, dNB), or a road site unit (RSU). The terminals may include not only legacy user equipment and mobile stations, but also vehicles supporting vehicular-to-vehicular (V2V) communication, vehicles supporting vehicular-to-pedestrian (V2P) communication or pedestrians' handsets (for example, smartphones), vehicles supporting vehicular-to-network (V2n) communication or vehicles supporting vehicular-to-infrastructure (V2I) communication, RSUs equipped with a terminal function, RSUs equipped with a base station function, or RSUs equipped with a part of the base station function and a part of the terminal function, and the like.

Meanwhile, in the disclosure, terminals may refer to vehicles supporting vehicular-to-vehicular (V2V) communication, vehicles supporting vehicular-to-pedestrian (V2P) communication or pedestrians' handsets (for example, smartphones), vehicles supporting vehicular-to-network (V2N) communication, or vehicles supporting vehicular-to-infrastructure (V2I) communication. Terminals may refer to user devices supporting device-to-device communication of public safety networks.

In addition, in the disclosure, a terminal may refer to a road side unit (RSU) equipped with a terminal function, a RSU equipped with a base station function, or a RSU equipped with a part of the base station function and a part of the terminal function.

In the disclosure, a relay may refer to a vehicle supporting V2X communication or a user device supporting device-to-device communication of a public safety network. In addition, in the disclosure, a relay may refer to a device equipped with a terminal function, a device equipped with a base station function, or a device equipped with a part of the terminal function and a part of the base station.

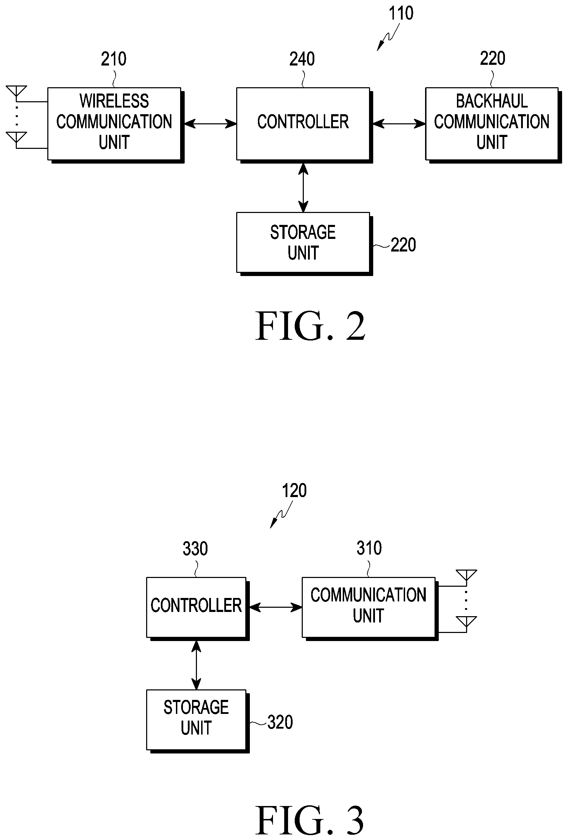

FIG. 2 illustrates the configuration of a base station in a wireless communication system according to an embodiment of the disclosure.

The configuration illustrated in FIG. 2 may be understood as the configuration of a base station (for example, 110 in FIG. 1A). As used herein, the term/suffix "unit"/"-er" refers to a unit configured to process at least one function or operation, and may be implemented as hardware, software, or a combination of hardware and software.

Referring to FIG. 2, the base station 110 may include a wireless communication unit 210, a backhaul communication unit 220, a storage unit 230, and a controller 240. However, components of the base station 110 are not limited to the above-described example. For example, the base station may include a larger or smaller number of components than the above-described components. Moreover, the wireless communication unit 210, the backhaul communication unit 220, the storage unit 230, and the controller 240 may be implemented as a single chip. In addition, the controller 240 may include one or more processors.

The wireless communication unit 210 may perform functions for transmitting/receiving signals through a radio channel. For example, the wireless communication unit 210 may perform functions of conversion between baseband signals and bitstrings according to the physical layer specification of the system. For example, during data transmission, the wireless communication unit 210 may encode and modulate a transmitted bitstring to generate complex symbols. In addition, during data reception, the wireless communication unit 210 may demodulate and decode a baseband signal to restore a received bitstring.

In addition, the wireless communication unit 210 up-converts a baseband signal to a radio frequency (RF) band signal, transmits the same through an antenna, and down-converts an RF band signal received through the antenna to a baseband signal. To this end, the wireless communication unit 210 may include a transmission filter, a reception filter, an amplifier, a mixer, an oscillator, a digital-to-analog converter (DAC), an analog-to-digital (ADC) converter, and the like. In addition, the wireless communication unit 210 may include multiple transmission/reception paths. Furthermore, the wireless communication unit 210 may include at least one antenna array including multiple antenna elements.

In hardware terms, the wireless communication unit 210 may include a digital unit and an analog unit, and the analog unit may include multiple sub-units according to the operating power, operating frequency, or the like. The digital unit may be implemented by at least one processor (for example, digital signal processor (DSP)).

The wireless communication unit 210 transmits and receives signals as described above. Accordingly, a part or entirety of the wireless communication unit 210 may be referred to as "transmitter", "receiver", or "transceiver". In addition, transmission and reception performed through a radio channel, as used in the following description, include the above-described processing performed by the wireless communication unit 210.

The backhaul communication unit 220 may provide an interface for communicating with other nodes in the network. That is, the backhaul communication unit 220 may convert bitstrings transmitted from the base station 110 to other nodes, for example, other access nodes, other base stations, upper-layer nodes, core networks, and the like, to physical signals, and may convert physical signals received from other nodes to bitstrings.

The storage unit 230 may store data such as basic programs for operations of the base station 110, application programs, and configuration information. The storage unit 230 may include volatile memory, nonvolatile memory, or a combination of volatile memory and nonvolatile memory. In addition, the storage unit 230 may provide stored data at the request of the controller 240.

The controller 240 may control overall operations of the base station 110. For example, the controller 240 may transmit and receive signals through the wireless communication unit 210 or the backhaul communication unit 220. In addition, the controller 240 records and reads data in the storage unit 230. The controller 240 may also perform functions of a protocol stack required by communication specifications. According to another example of implementation, the protocol stack may be included in the wireless communication unit 210. To this end, the controller 240 may include at least one processor. According to an embodiment, the controller 240 may control the base station 110 so as to perform operations according to an embodiment described later.

FIG. 3 illustrates the configuration of a relay or a terminal in a wireless communication system according to an embodiment of the disclosure.

The configuration illustrated in FIG. 3 may be understood as the configuration of a relay (for example, 120 in FIG. 1A) or a terminal (for example, 130 or 140 in FIG. 1A). As used herein, the term/suffix "unit"/"-er" refers to a unit configured to process at least one function or operation, and may be implemented as hardware, software, or a combination of hardware and software.

Referring to FIG. 3, the relay 120 or the terminal 130 or 140 may include a communication unit 310, a storage unit 320, and a controller 330. However, components of the relay 120 or the terminal 130 or 140 are not limited to the above-described example. For example, the relay 120 or the terminal 130 or 140 may include a larger or smaller number of components than the above-described components. Moreover, the communication unit 310, the storage unit 320, and the controller 330 may be implemented as a single chip. In addition, the controller 330 may include one or more processors.

The communication unit 310 performs functions for transmitting/receiving signals through a radio channel. For example, the communication unit 310 may perform functions of conversion between baseband signals and bitstrings according to the physical layer specification of the system. For example, during data transmission, the communication unit 310 encodes and modulates a transmitted bitstring to generate complex symbols. In addition, during data reception, the communication unit 310 may demodulate and decode a baseband signal to restore a received bitstring. In addition, the communication unit 310 may up-convert a baseband signal to an RF band signal, may transmit the same through an antenna, and may down-convert an RF band signal received through the antenna to a baseband signal. For example, the communication unit 310 may include a transmission filter, a reception filter, an amplifier, a mixer, an oscillator, a DAC, an ADC, and the like.

In addition, the communication unit 310 may include multiple transmission/reception paths. Furthermore, the communication unit 310 may include at least one antenna array including multiple antenna elements. In hardware terms, the communication unit 310 may include a digital circuit and an analog circuit (for example, a radio frequency integrated circuit (RFIC)). The digital circuit and the analog circuit may be implemented as a single package. The communication unit 310 may also include multiple RF chains. The communication unit 310 may also perform beamforming.

The communication unit 310 may transmit and receive signals as described above. Accordingly, a part or entirety of the communication unit 310 may be referred to as "transmitter", "receiver", or "transceiver". In addition, transmission and reception performed through a radio channel, as used in the following description, may include the above-described processing performed by the communication unit 310.

The storage unit 320 may store data such as basic programs for operations of the relay 120 or the terminal 130 or 140, application programs, and configuration information. The storage unit 320 may include volatile memory, nonvolatile memory, or a combination of volatile memory and nonvolatile memory. In addition, the storage unit 320 provides stored data at the request of the controller 330.

The controller 330 may control overall operations of the relay 120 or the terminal 130 or 140. For example, the controller 330 may transmit and receive signals through the communication unit 310. In addition, the controller 330 records and reads data in the storage unit 320. The controller 330 may also perform functions of a protocol stack required by communication specifications. To this end, the controller 330 may include at least one processor or a microprocessor, or may be a part of the processor. In addition, a part of the communication unit 310 and the controller 330 may be referred to as a communication processor (CP). According to an embodiment, the controller 330 may control the relay 120 or the terminal 130 or 140 so as to perform operations according to an embodiment described later.

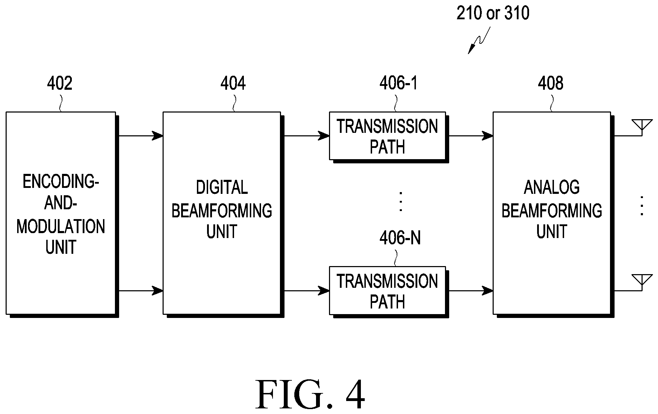

FIG. 4 illustrates the configuration of a communication unit in a wireless communication system according to an embodiment of the disclosure.

FIG. 4 illustrates an example of the detailed configuration of the wireless communication unit 210 in FIG. 2 or the communication unit 310 in FIG. 3. Particularly, FIG. 4 illustrates components for performing beamforming, as a part of the wireless communication unit 210 in FIG. 2 or the communication unit 310 in FIG. 3.

Referring to FIG. 4, the wireless communication unit 210 or the communication unit 310 may include an encoding-and-modulation unit 402, a digital beamforming unit 404, multiple transmission paths 406-1 to 406-N, and an analog beamforming unit 408.

The encoding-and-modulation unit 402 may perform channel encoding. For channel encoding, at least one of a low density parity check (LDPC) code, a convolution code, and a polar code may be used. The encoding-and-modulation unit 402 performs constellation mapping so as to generate modulation symbols.

The digital beamforming unit 404 may perform beamforming with regard to a digital signal (for example, modulation symbols). To this end, the digital beamforming unit 404 multiplies modulation symbols by weights. The beamforming weights are used to change the magnitude and phase of signals, and may be referred to as "precoding matrix", "precoder", or the like. The digital beamforming unit 404 may output digitally-beamformed modulation symbols to the multiple transmission paths 406-1 to 406-N. According to a multiple input multiple output (MIMO) transmission scheme, modulation symbols may be multiplexed, or identical modulation symbols may be provided to the multiple transmission paths 406-1 to 406-N.

The multiple transmission paths 406-1 to 406-N may convert digitally-beamformed digital signals to analog signals. To this end, each of the multiple transmission paths 406-1 to 406-N may include an inverse fast Fourier transform (IFFT) computation unit, a cyclic prefix (CP) insertion unit, a DAC, and an up-conversion unit. The CP insertion unit is for an orthogonal frequency division multiplexing (OFDM) scheme, and may be excluded if other physical layer schemes (for example, filter bank multi-carrier (FBMC)) are applied. That is, the multiple transmission paths 406-1 to 406-N may provide an independent process for signal processing with regard to multiple streams generated through digital beamforming. However, depending on the implementation scheme, some of the multiple transmission paths 406-1 to 406-N may be used in common.

The analog beamforming unit 408 may perform beamforming regarding analog signals. To this end, the digital beamforming unit 404 may multiply analog signals by beamforming weights. The beamforming weights are used to change the magnitude and phase of signals. Particularly, the analog beamforming unit 440 may be variously configured, depending on the structure of connection between multiple transmission paths 406-1 to 406-N and antennas. For example, each of the multiple transmission paths 406-1 to 406-N may be connected to one antenna array. As another example, the multiple transmission paths 406-1 to 406-N may be connected to one antenna array. As another example, the multiple transmission paths 406-1 to 406-N may be adaptively connected to one antenna array or connected to two or more antenna arrays.

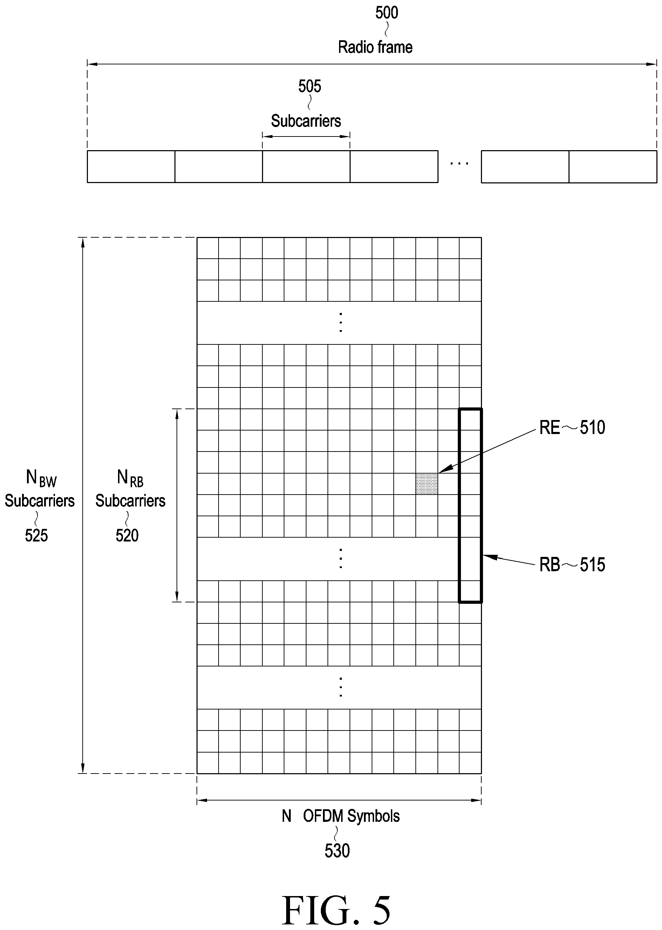

FIG. 5 illustrates the structure of a time-frequency resource of a wireless communication system according to an embodiment of the disclosure.

Referring to FIG. 5, the horizontal axis in the radio resource domain refers to the time domain, and the vertical axis refers to the frequency domain. The minimum transmission unit in the time domain is an OFDM symbol or a DFT-S-OFDM symbol, and one slot 505 may include N_{symb} OFDM symbols or DFT-S-OFDM symbols 530. Unlike slots, the length of a subframe in an NR system may be defined as 1.0ms, and the length of a radio frame 500 may be defined as 10ms. The minimum transmission unit in the frequency domain is a subcarrier, and the entire system transmission bandwidth may include a total of N_{BW} subcarriers 525. Specific numerical values such as N_{symb} and N_{BW} may be variably applied, depending on the system.

The basic unit of the time-frequency resource domain is a resource element (RE), which may be represented by an OFDM symbol index or a DFT-S-OFDM symbol index and a subcarrier index. A resource block (RB) 515 may be defined as N_{RB} consecutive subcarriers 520 in the frequency domain. In general, the minimum transmission unit of data is the RB unit, and in general, N_{symb} = 14 and N_{RB} = 12 in an NR system.

The time-frequency resource structure as in FIG. 5 is applicable to a Uu interface. In addition, the time-frequency resource structure as in FIG. 5 is similarly applicable to a sidelink.

A sidelink relay capable of relaying packet transmission/reception between a remote terminal and another remote terminal or between a remote terminal and a network may be authenticated to be used in at least one of a specific service, a specific terminal, a specific sidelink flow, a specific sidelink bearer, a specific unicast link, a specific source identifier, and a specific target identifier. The sidelink relay may configure direction connection with a terminal authenticated at the timepoint of installation. In an embodiment, the sidelink relay may transmit a sidelink relay search message and may perform a sidelink direct connection configuration procedure with the authenticated terminal. In another embodiment, the sidelink relay may receive a sidelink relay search message from an authenticated terminal, may transmit a sidelink relay search message to the authenticated terminal, and may perform a sidelink direct connection configuration procedure with the terminal. In various embodiments, the sidelink relay search message may be understood as a message transmitted between the sidelink relay and the terminal to initiate a sidelink relay search procedure, and may include a message for a search or a message for requesting a search. Configuration information needed by a sidelink relay terminal and a sidelink remote terminal to transmit or receive a sidelink relay search message may be acquired from the base station or configured in advance.

A terminal may be authenticated such that sidelink direction connection is used in at least one of a specific service, a specific terminal, a specific sidelink flow, a specific sidelink bearer, a specific unicast link, a specific source identifier, and a specific target identifier. In an embodiment, a terminal may transmit a sidelink relay search message to search for another terminal capable of performing a sidelink direct connection configuration, and may perform a sidelink direct connection configuration procedure with an authenticated terminal. In another embodiment, a terminal may receive a sidelink search message from an authenticated terminal, may transmit a sidelink search message to the authenticated terminal, and may perform a sidelink direct connection configuration procedure with the terminal.

In a procedure for searching for a relay capable of relaying packet transmission/reception between a remote terminal and another remote terminal or between a remote terminal and a network, the transmission mode for transmitting a sidelink relay search message between the remote terminal and the sidelink relay may correspond to one of unicast, groupcast, and broadcast, and a sidelink relay search message may be transmitted/received in case that a sidelink discontinuous reception mode is configured between the remote terminal and the sidelink relay. The sidelink relay search message does not follow a specific QoS profile, and sidelink discontinuous reception mode configuration information of the remote terminal and the sidelink relay, which is applied when the sidelink relay search message is transmitted/received, may be defined as default configuration information.

In order to transmit/receive traffic transmitted/received between a remote terminal and another remote terminal or traffic transmitted/received between a remote terminal and a network through a sidelink relay, the remote terminal may configure sidelink direct communication connection with the sidelink relay. A discontinuous reception mode may be configured with regard to sidelink traffic transmitted/received through the sidelink direct communication connection between the remote terminal and the sidelink relay, and a scheme for configuring a discontinuous reception mode with regard to the sidelink direct communication connection between the remote terminal and the sidelink relay will be described with reference to various embodiments in the disclosure. In case that the sidelink direct communication connection between the remote terminal and the sidelink relay is configured in a unicast transmission mode, a sidelink discontinuous reception mode may be configured with regard to the remote terminal's source two-layer identifier (SRC L2 ID) and the sidelink relay's target two-layer identifier (DST L2 ID), and may be configured with regard to sidelink relay's source two-layer identifier and the remote terminal's target two-layer identifier. The discontinuous reception mode of the sidelink relay and the remote terminal may be configured by a periodic DRX cycle, a DRX active time, and a DRX inactive time (during this time, the receiving terminal may perform PSCCH reception and sidelink RSRP measurement for a sensing purpose). The discontinuous reception mode configuration information of the sidelink relay and the remote terminal may include at least one of a DRX on-duration timer, a DRX inactivity timer, a DRX HARQ RTT timer, a DRX retransmission Timer, a DRX cycle, a DRX start offset, and a DRX slot offset, or a combination thereof.

The remote terminal communicating with the sidelink relay may maintain one of an RRC connected mode (RRC_CONNECTED state), an RRC idle mode (RRC_IDLE state), and an RRC inactive mode (RRC_INACTIVE state) with regard to the base station. The sidelink relay communicating with the remote terminal may maintain one of an RRC connected mode (RRC_CONNECTED state), an RRC idle mode (RRC_IDLE state), and an RRC inactive mode (RRC_INACTIVE state) with regard to the base station. The sidelink relay and the remote terminal may play the role of a transmitting terminal and a receiving terminal of sidelink direct communication with each other, and may perform sidelink direct communication while maintaining one of the RRC connected mode, the RRC idle mode, and the RRC inactive mode with regard to the base station.

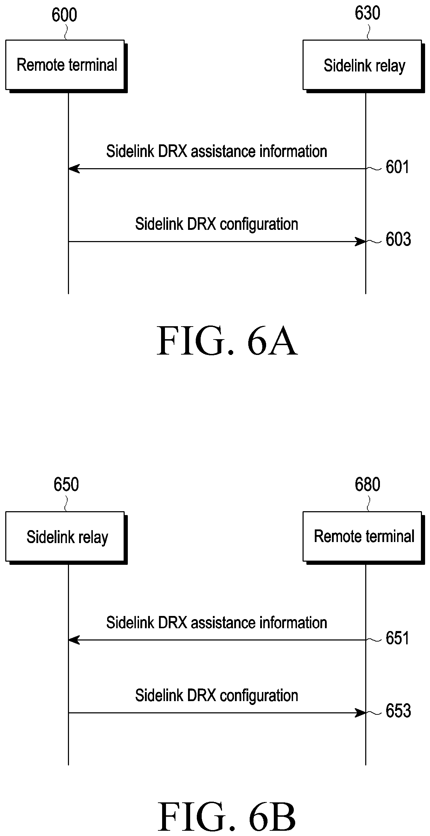

FIG. 6A and FIG. 6B illustrate a procedure in which a remote terminal and a sidelink relay configure a discontinuous reception mode according to an embodiment of the disclosure.

FIG. 6A illustrates a discontinuous reception mode configuration procedure in the case of sidelink direct communication in which the remote terminal 600 is a transmitting terminal, and the sidelink relay 630 is a receiving terminal. FIG. 6B illustrates a discontinuous reception mode configuration procedure in the case of sidelink direct communication in which the sidelink relay 650 is a transmitting terminal, and the remote terminal 680 is a receiving terminal. Each of the remote terminal and the sidelink relay in FIG. 6A and FIG. 6B may be applied to a case in which one of an RRC connected mode, an RRC idle mode, and an RRC inactive mode is maintained with regard to the base station.

Referring to FIG. 6A, the remote terminal 600 and the sidelink relay 630 may perform sidelink direct communication such that the remote terminal 600 transmits/receives data with another remote terminal or with a network. If it is determined that a sidelink discontinuous reception mode needs to be configured with regard to the sidelink direct communication of the remote terminal 600 and the sidelink relay 630, the sidelink relay 630 corresponding to a receiving terminal may transmit a sidelink DRX assistance information message to the remote terminal 600 corresponding to a transmitting terminal in step 601.

According to an embodiment, the sidelink DRX assistance information may include information of at least one of a sidelink DRX cycle preferred by the sidelink relay 630, a sidelink on-duration timer, a sidelink inactivity timer, and a sidelink start offset, or a combination thereof. The sidelink DRX assistance information may correspond to a UEAssistanceInformationSidelink message, for example.
(1) Information included in sidelink DRX assistance information may be configured based on Uu discontinuous reception mode configuration information configured with the base station in an RRC connected mode with the sidelink relay 630. This information may be used to match the Uu discontinuous reception mode of the sidelink relay 630 and the sidelink discontinuous reception mode between the remote terminal 600 and the sidelink relay 630 to the maximum extent, thereby minimizing battery consumption by the sidelink relay 630 and the remote terminal 600.
(2) Information included in sidelink DRX assistance information may be configured based on sidelink discontinuous reception mode configuration information already configured by the sidelink relay 630 with another remote terminal. This information may be used by the sidelink relay 630 to match the sidelink discontinuous reception mode of remote terminals connected thereto to the maximum extent, thereby minimizing battery consumption by the sidelink relay 630 and the remote terminal 600.
(3) Information included in sidelink DRX assistance information may be configured based on a paging opportunity/paging cycle during which the sidelink relay 630 in an RRC connected mode needs to perform paging monitoring/paging relay transmission of remote terminals (the remote terminal 600 and other remote terminals) connected thereto. This information may be used by the sidelink relay to match the interval during which the Uu link is monitored to identify paging of remote terminals connected thereto and the sidelink discontinuous reception mode to the maximum extent, thereby minimizing battery consumption by the sidelink relay 630 and the remote terminal 600.
(4) Information included in sidelink DRX assistance information may be configured based on a paging opportunity/paging cycle during which the sidelink relay 630 in an RRC idle mode or RRC inactive mode needs to perform paging monitoring/paging relay transmission of remote terminals (the remote terminal 600 and other remote terminals). This information may be used by the sidelink relay to match the interval during which the Uu link is monitored to identify paging of remote terminals connected thereto and the sidelink discontinuous reception mode to the maximum extent, thereby minimizing battery consumption by the sidelink relay 630 and the remote terminal 600.
(5) Information included in sidelink DRX assistance information may be configured, in case that the remote terminal 600 performs traffic transmission/reception with another remote terminal through the sidelink relay 630, based on the sidelink discontinuous reception mode configuration between the sidelink relay 630 and the other remote terminal. The sidelink discontinuous reception mode configuration information with the other remote terminal may include at least one of a DRX on-duration timer, a DRX inactivity timer, a DRX HARQ RTT timer, a DRX retransmission timer, a DRX cycle, a DRX start offset, a DRX slot offset, or a combination thereof. This information may be used by the sidelink relay 630 to match the sidelink discontinuous reception mode configurations with the source remote terminal and the target remote terminal, respectively, mode to the maximum extent, thereby minimizing battery consumption by the sidelink relay 630 and the remote terminal 600.
(6) Information included in sidelink DRX assistance information may be configured based on paging opportunity/paging cycle information to be used by the sidelink relay 630 in an RRC idle mode or RRC inactive mode to perform paging monitoring thereof. This information may be used by the sidelink relay 630 to match the interval during which the Uu link is monitored to identify paging thereof and the sidelink discontinuous reception mode to the maximum extent, thereby minimizing battery consumption by the sidelink relay 630 and the remote terminal 600.
(7) Information included in sidelink DRX assistance information may be configured based on downlink traffic pattern or uplink traffic pattern information of the sidelink relay 630. This information may be used by the sidelink relay 630 to match the interval during which uplink traffic transmission or downlink traffic reception is performed thereby and the sidelink discontinuous reception mode to the maximum extent, thereby minimizing battery consumption by the sidelink relay 630 and the remote terminal 600.
(8) Information included in sidelink DRX assistance information may be configured based on information of at least one of parameters constituting the sidelink DRX assistance information in (1), (2), (3), (4), (5), (6), and (7) described above, or a combination thereof.

The remote terminal 600 may transmit sidelink discontinuous reception mode configuration information (sidelink DRX configuration) with the sidelink relay 630 to the sidelink relay 630 in step 603. The discontinuous reception mode configuration information of the sidelink relay 630 and the remote terminal 600 in step 603 may include at least one of a DRX on-duration timer, a DRX inactivity timer, a DRX HARQ RTT timer, a DRX retransmission timer, a DRX cycle, a DRX start offset, and DRX slot offset, or a combination thereof. The sidelink relay 630 may then determine whether to accept or reject the sidelink discontinuous reception mode configuration information received in step 603, and may transmit a message (or information) indicating acceptance or rejection to the remote terminal 600.

Referring to FIG. 6B, the remote terminal 680 and the sidelink relay 650 may perform sidelink direct communication such that the remote terminal 680 transmits/receives data with another remote terminal or with a network. If it is determined that a sidelink discontinuous reception mode needs to be configured with regard to the sidelink direct communication of the remote terminal 680 and the sidelink relay 650, the remote terminal 680 corresponding to a receiving terminal may transmit a sidelink DRX assistance information message to the sidelink relay 650 corresponding to a transmitting terminal in step 651.

According to an embodiment, the sidelink DRX assistance information may include information of at least one of a sidelink DRX cycle preferred by the remote terminal 680, a sidelink on-duration timer, a sidelink inactivity timer, and a sidelink start offset, or a combination thereof. The sidelink DRX assistance information may correspond to a UEAssistanceInformationSidelink message and/or a RemoteUEInformationSidelink message, for example.
(1) Information included in sidelink DRX assistance information may be configured based on downlink traffic pattern information received by the remote terminal 680 in an RRC connected mode with the base station. This information may be used by the sidelink relay 650 to match the interval during which downlink data of the remote terminal 680 is monitored in the Uu link and the sidelink discontinuous reception mode to the maximum extent, thereby minimizing battery consumption by the sidelink relay 650 and the remote terminal 680.
(2) Information included in sidelink DRX assistance information may be configured based on paging opportunity/paging cycle assistance information provided to the sidelink relay 650 by the remote terminal 680 in an RRC idle mode or RRC inactive mode in order to receive paging through the sidelink relay 650. This information may be used by the sidelink relay 650 to match the interval during which paging of the remote terminal 680 is monitored and relayed in the Uu link and the sidelink discontinuous reception mode to the maximum extent, thereby minimizing battery consumption by the sidelink relay 650 and the remote terminal 680.

The sidelink relay 650 may transmit sidelink discontinuous reception mode configuration information with the remote terminal 680 to the remote terminal 680 in step 653. The discontinuous reception mode configuration information of the sidelink relay 650 and the remote terminal 680 in step 653 may include at least one of a DRX on-duration timer, a DRX inactivity timer, a DRX HARQ RTT timer, a DRX retransmission timer, a DRX cycle, a DRX start offset, and DRX slot offset, or a combination thereof.

The remote terminal 680 may then determine whether to accept or reject the sidelink discontinuous reception mode configuration information received in step 653, and may transmit a message (or information) indicating acceptance or rejection to the sidelink relay 650.

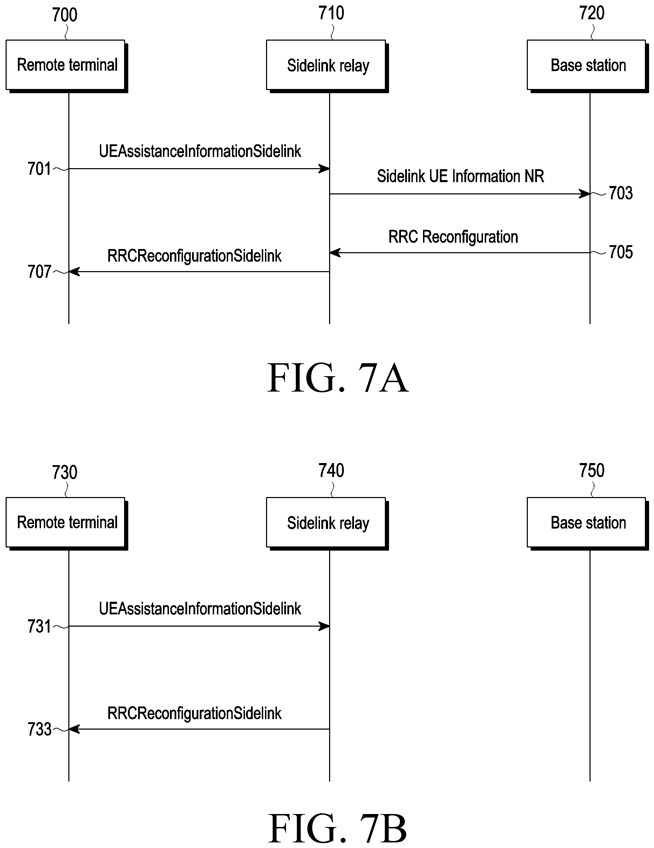

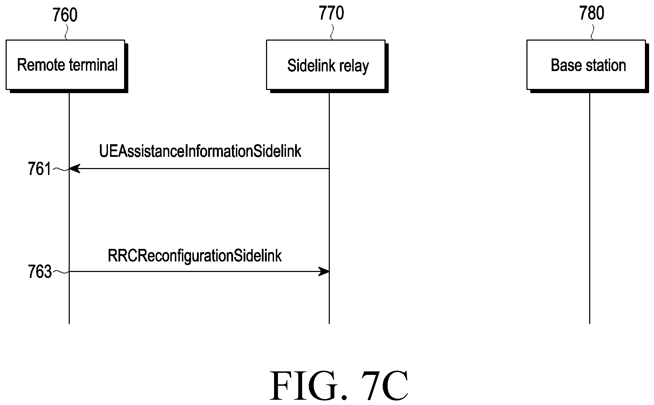

FIG. 7A, FIG. 7B, and FIG. 7C illustrate a procedure in which a remote terminal and a sidelink relay configure a discontinuous reception mode according to an embodiment of the disclosure.

FIG. 7A illustrates a discontinuous reception mode configuration procedure in connection with sidelink direct communication assuming that the remote terminal 700 is a receiving terminal, and the sidelink relay 710 is a transmitting terminal. FIG. 7A illustrates operations of the remote terminal 700 and the sidelink relay 710 for processing a sidelink discontinuous reception mode configuration in case that the remote terminal 700 maintains an RRC connected mode with the base station 720, and the sidelink relay 710 maintains an RRC connected mode with the base station 720, and in case that a mode (mode 1) is configured such that the base station 720 schedules a sidelink transmission resource for the sidelink relay 710.

Referring to FIG. 7A, in step 701, the remote terminal 700 may transmit a UEAssistanceInformationSidelink message including preferred sidelink discontinuous reception mode configuration information to the sidelink relay 710. The UEAssistanceInformationSidelink message may include information of at least one of a sidelink DRX cycle preferred by the remote terminal 700, a sidelink on-duration timer, a sidelink inactivity timer, and a sidelink start offset, or a combination thereof.

As an example, the remote terminal 700 may configure the preferred sidelink discontinuous reception mode configuration information, based on downlink traffic pattern information thereof, during traffic transmission/reception with the network through the sidelink relay 710. As an example, the remote terminal 700 may configure the preferred sidelink discontinuous reception mode configuration information, based on received traffic pattern information thereof, during traffic transmission/reception with another remote terminal through the sidelink relay 710.

If the base station 720 determines that a mode (mode 1) in which a sidelink transmission resource is scheduled has been configured, the sidelink relay 710 may compose a SidelinkUEInformationNR message, based on the discontinuous reception mode configuration information of the remote terminal 700 received in step 701, and transmit the same to the base station 720 in step 703.

The SidelinkUEInformationNR message in step 703 may include at least one of the sidelink target identifier (DST L2 ID) of the sidelink relay 710, the sidelink source identifier (SRC L2 ID) of the remote terminal 700, the local identifier (remote terminal identification information which may be included in an adaptation layer header) of the remote terminal 700, and the preferred sidelink discontinuous reception mode configuration information received from the remote terminal 700 in step 701, or a combination thereof.

In case that a sidelink discontinuous reception mode is configured with regard to the counterpart remote terminal which transmits/receives traffic with the remote terminal 700 through the sidelink relay 710, the sidelink relay 710 may transmit configuration information in step 703 such that sidelink discontinuous reception mode configuration information preferred by the remote terminal 700 can match with the sidelink discontinuous reception mode of the counterpart remote terminal.

In step 705, the base station 720 may configure sidelink discontinuous reception mode configuration information of the remote terminal 700 and the sidelink relay 710 and may transmit an RRCReconfiguration including the configuration information to the sidelink relay 710. The RRCReconfiguration message in step 705 may include at least one of the sidelink target identifier (DST L2 ID) of the sidelink relay 710, the sidelink source identifier (SRC L2 ID) of the remote terminal 700, the local identifier (remote terminal identification information which may be included in an adaptation layer header) of the remote terminal 700, and sidelink discontinuous reception mode configuration information of the remote terminal 700, or a combination thereof.

The base station 720 may configure the sidelink discontinuous reception mode configuration information in step 705, based on at least one of downlink traffic pattern information which the remote terminal 700 may receive from the network, Uu discontinuous reception mode configuration information of the sidelink relay 710, and a downlink traffic pattern/uplink traffic pattern which the sidelink relay 710 may receive from the network, or a combination thereof.

In step 707, the sidelink relay 710 may compose an RRCReconfigurationSidelink message including the sidelink discontinuous reception mode configuration information acquired from the RRC reconfiguration message received from the base station 720, and may transmit the same to the remote terminal 700. The remote terminal 700 may then determine whether to accept or reject the sidelink discontinuous reception mode configuration information received in step 707, and may transmit a message (or information) indicating acceptance or rejection to the sidelink relay 710.

According to an embodiment, steps 703 to 705 among the above-described steps 701 to 707 may not be performed. According to another embodiment, steps 701 to 703 among the above-described steps 701 to 707 may not be performed. According to another embodiment, step 701 among the above-described steps 701 to 707 may be omitted.

In another embodiment, the remote terminal 700 may transmit a UEAssistanceInformationSidelink message including preferred sidelink discontinuous reception mode configuration information to the sidelink relay 710 in step 701. According to an embodiment, the UEAssistanceInformationSidelink message may include information of at least one of a preferred sidelink DRX cycle, a sidelink on-duration timer, a sidelink inactivity timer, and a sidelink start offset, or a combination thereof.

As an example, the remote terminal 700 may configure the preferred sidelink discontinuous reception mode configuration information, based on downlink traffic pattern information thereof. The sidelink relay 710 may configure sidelink discontinuous reception mode configuration information with the remote terminal 700 without having to perform a procedure necessary for the sidelink discontinuous reception mode configuration information with the base station 720.

The sidelink relay 710 may configure sidelink discontinuous reception mode configuration information of the remote terminal 700, based on at least one of sidelink discontinuous reception mode configuration information preferred by the remote terminal 700 received in step 701, Uu discontinuous reception mode configuration information configured for the sidelink relay 710, sidelink discontinuous reception mode configuration information configured between the sidelink relay 710 and another remote terminal, a paging opportunity which the sidelink relay 710 in an RRC connected mode needs to monitor therefor or for another remote terminal connected thereto, and a paging cycle, or a combination thereof.

In case that a sidelink discontinuous reception mode is configured with regard to the counterpart remote terminal which transmits/receives traffic with the remote terminal 700 through the sidelink relay 710, the sidelink relay 710 may configure sidelink discontinuous reception mode configuration information of the remote terminal 700 in consideration of the sidelink discontinuous reception mode configuration information of the counterpart remote terminal as well. In step 707, the sidelink relay 710 may transmit an RRCReconfigurationSidelink message including the configured sidelink discontinuous reception mode configuration information to the remote terminal 700. The remote terminal 700 may then determine whether to accept or reject the sidelink discontinuous reception mode configuration information received in step 707, and may transmit a message (or information) indicating acceptance or rejection to the sidelink relay 710.

In another embodiment, if it is determined necessary to configure a sidelink discontinuous reception mode between the remote terminal 700 and the sidelink relay 710, the base station 720 may configure the sidelink discontinuous reception mode configuration of the remote terminal 700 and, in step 705, the base station 720 may transmit an RRCReconfiguration message including sidelink discontinuous reception mode configuration information to the sidelink relay 710. The base station 720 may configure the sidelink discontinuous reception mode configuration information in step 705, based on at least one of downlink traffic pattern information which the remote terminal 700 may receive from the network, Uu discontinuous reception mode configuration information of the sidelink relay 710, and a downlink traffic pattern/uplink traffic pattern which the sidelink relay 710 may receive from the network, or a combination thereof.

The RRCReconfiguration message in step 705 may include at least one of the sidelink source L2 ID of the remote terminal 700, the sidelink target L2 ID of the sidelink relay 710, the local identifier (remote terminal identification information which may be included in an adaptation layer header) of the remote terminal 700, and sidelink discontinuous reception mode configuration information of the remote terminal 700, or a combination thereof. In step 707, the sidelink relay 710 may transmit an RRCReconfigurationSidelink message including the configured sidelink discontinuous reception mode configuration information in the RRCReconfiguration message received in step 705 to the remote terminal 700. The remote terminal 700 may then determine whether to accept or reject the sidelink discontinuous reception mode configuration information received in step 707, and may transmit a message (or information) indicating acceptance or rejection to the sidelink relay 710.

In another embodiment, the remote terminal 700 may not transmit a UEAssistanceInformationSidelink message including preferred sidelink discontinuous reception mode configuration information to the sidelink relay 710. Upon determining that a sidelink discontinuous reception mode configuration with the remote terminal 700 is necessary, the sidelink relay 710 may determine that a mode (mode 1) in which the base station 720 schedules a sidelink transmission resource is configured, and may transmit a SidelinkUEInformationNR message to the base station 720 in step 703.

The SidelinkUEInformationNR message in step 703 may include at least one of the sidelink target identifier (DST L2 ID) of the sidelink relay 710, the sidelink source identifier (SRC L2 ID) of the remote terminal 700, and the local identifier (remote terminal identification information which may be included in an adaptation layer header) of the remote terminal 700, or a combination thereof.

In case that a sidelink discontinuous reception mode is configured with regard to the counterpart remote terminal which transmits/receives traffic with the remote terminal 700 through the sidelink relay 710, the sidelink relay 710 may transfer the sidelink discontinuous reception mode configuration information of the remote terminal in step 703 such that the sidelink discontinuous reception mode configuration information of the remote terminal 700 can match with the sidelink discontinuous reception mode of the counterpart remote terminal.

The base station 720 may configure sidelink discontinuous reception mode configuration information of the remote terminal 700, may include the configuration information in an RRCReconfiguration message, and may transmit the RRCReconfiguration message to the sidelink relay 710 in step 705.

The RRCReconfiguration message in step 705 may include at least one of the sidelink target identifier (DST L2 ID) of the sidelink relay 710, the sidelink source identifier (SRC L2 ID) of the remote terminal 700, the local identifier (remote terminal identification information which may be included in an adaptation layer header) of the remote terminal 700, and sidelink discontinuous reception mode configuration information of the remote terminal 700, or a combination thereof. The base station 720 may configure the sidelink discontinuous reception mode configuration information in step 705, based on at least one of downlink traffic pattern information which the remote terminal 700 may receive from the network, Uu discontinuous reception mode configuration information of the sidelink relay 710, and a downlink traffic pattern/uplink traffic pattern which the sidelink relay 710 may receive from the network, or a combination thereof.

The base station 720 may also consider sidelink discontinuous reception mode configuration information configured with regard to the counterpart remote terminal of the remote terminal 700 transferred from the sidelink relay 710. The sidelink relay 710 may acquire sidelink discontinuous reception mode configuration information from the RRCReconfiguration message received from the base station 720, may configure an RRCReconfigurationSidelink including this information, and may transfer the same to the remote terminal 700 in step 707. The remote terminal 700 may then determine whether to accept or reject the sidelink discontinuous reception mode configuration information received in step 707, and may transmit an acceptance or a rejection to the sidelink relay 710.

In another embodiment, the remote terminal 700 may transmit a UEAssistanceInformationSidelink message including preferred sidelink discontinuous reception mode configuration information to the sidelink relay 710 in step 701. The remote terminal 700 may include information of at least one of a preferred sidelink DRX cycle, a sidelink on-duration timer, a sidelink inactivity timer, and a sidelink start offset, or a combination thereof.

As an example, the remote terminal 700 may configure the preferred sidelink discontinuous reception mode configuration information, based on downlink traffic pattern information thereof. The sidelink relay 710 may configure sidelink discontinuous reception mode configuration information with the remote terminal 700. The sidelink relay 710 may configure sidelink discontinuous reception mode configuration information of the remote terminal 700, based on at least one of sidelink discontinuous reception mode configuration information preferred by the remote terminal 700 received in step 701, Uu discontinuous reception mode configuration information configured for the sidelink relay 710, sidelink discontinuous reception mode configuration information configured between the sidelink relay 710 and another remote terminal, a paging opportunity which the sidelink relay 710 in an RRC connected mode needs to monitor therefor or for another remote terminal connected thereto, and a paging cycle, or a combination thereof.

In case that a sidelink discontinuous reception mode is configured with regard to the counterpart remote terminal which transmits/receives traffic with the remote terminal 700 through the sidelink relay 710, the sidelink relay 710 may also consider the sidelink discontinuous reception mode configuration information of the counterpart remote terminal such that the sidelink discontinuous reception mode configuration information preferred by the remote terminal 700 can match with the sidelink discontinuous reception mode of the counterpart remote terminal.

Upon determining that a mode (mode 1) in which the base station 720 schedules a sidelink transmission resource is configured, the sidelink relay 710 may compose a SidelinkUEInformationNR message including the sidelink discontinuous reception mode configuration information of the remote terminal 700 configured thereby, and may transmit the SidelinkUEInformationNR message to the base station 720 in step 703.

The SidelinkUEInformationNR message in step 703 may include at least one of the sidelink target identifier (DST L2 ID) of the sidelink relay 710, the sidelink source identifier (SRC L2 ID) of the remote terminal 700, the local identifier (remote terminal identification information which may be included in an adaptation layer header) of the remote terminal 700, and the sidelink discontinuous reception mode configuration information configured by the sidelink relay 710, or a combination thereof. The base station 720 may identify the sidelink discontinuous reception mode configuration information of the remote terminal 700 configured by the sidelink relay 710, and may transmit an RRCReconfiguration message to the sidelink relay 710 in step 705 as a message identifying the same.

If necessary, the base station 720 may correct the sidelink discontinuous reception mode configuration information of the remote terminal 700, may include the corrected sidelink discontinuous reception mode configuration information in an RRCReconfiguration message, and may transmit the RRCReconfiguration message, to the sidelink relay 710 in step 705. The RRCReconfiguration message in step 705 may include at least one of the sidelink target identifier (DST L2 ID) of the sidelink relay 710, the sidelink source identifier (SRC L2 ID) of the remote terminal 700, the local identifier (remote terminal identification information which may be included in an adaptation layer header) of the remote terminal 700, and identification/correction information regarding the sidelink discontinuous reception mode configuration information of the remote terminal 700, or a combination thereof.

The base station 720 may identify and/or correct sidelink discontinuous reception mode configuration information, based on at least one of downlink traffic pattern information which the remote terminal 700 may receive from the network, Uu discontinuous reception mode configuration information of the sidelink relay 710, and a downlink traffic pattern/uplink traffic pattern which the sidelink relay 710 may receive from the network, or a combination thereof. The sidelink relay 710 may identify the sidelink discontinuous reception mode configuration information of the remote terminal 700, based on the RRCReconfiguration message received from the base station 720, may configure an RRCReconfigurationSidelink message including the sidelink discontinuous reception mode configuration information of the remote terminal 700, and may transmit the same to the remote terminal 700 in step 707. The remote terminal 700 may then determine whether to accept or reject the sidelink discontinuous reception mode configuration information received in step 707, and may transmit an acceptance or rejection to the sidelink relay 710.

FIG. 7B illustrates a discontinuous reception mode configuration procedure in connection with sidelink direct communication assuming that the remote terminal 730 is a receiving terminal, and the sidelink relay 740 is a transmitting terminal. FIG. 7B illustrates operations of the remote terminal 730 and the sidelink relay 740 for processing a sidelink discontinuous reception mode configuration in case that the remote terminal 730 maintains an RRC connected mode with the base station 750, and the sidelink relay 740 maintains an RRC connected mode with the base station 750, and in case that a mode (mode 2) in which the sidelink relay 740 directly allocates a sidelink transmission resource is configured.

Referring to FIG. 7B, the remote terminal 730 may transmit a UEAssistanceInformationSidelink message including preferred sidelink discontinuous reception mode configuration information to the sidelink relay 740 in step 731. The UEAssistanceInformationSidelink message may include information of at least one of a preferred sidelink DRX cycle, a sidelink on-duration timer, a sidelink inactivity timer, and a sidelink start offset, or a combination thereof.

As an example, the remote terminal 730 may configure the preferred sidelink discontinuous reception mode configuration information, based on downlink traffic pattern information thereof. the sidelink relay 740 may configure sidelink discontinuous reception mode configuration information with the remote terminal 730. In step 731, the sidelink relay 740 may configure sidelink discontinuous reception mode configuration information of the remote terminal 730, based on at least one of sidelink discontinuous reception mode configuration information preferred by the remote terminal 730 received in step 731, Uu discontinuous reception mode configuration information configured for the sidelink relay 740, sidelink discontinuous reception mode configuration information configured between the sidelink relay 740 and another remote terminal, a paging opportunity which the sidelink relay 740 in an RRC connected mode needs to monitor therefor or for another remote terminal connected thereto, and a paging cycle, or a combination thereof.

In case that a sidelink discontinuous reception mode is configured with regard to the counterpart remote terminal which transmits/receives traffic with the remote terminal 730 through the sidelink relay 740, the sidelink relay 740 may also consider the sidelink discontinuous reception mode configuration information of the counterpart remote terminal such that the sidelink discontinuous reception mode configuration information of the remote terminal 730 can match with the sidelink discontinuous reception mode of the counterpart remote terminal. The sidelink relay 730 may transmit an RRCReconfigurationSidelink message including the configured sidelink discontinuous reception mode configuration information to the sidelink relay 730 in step 733. The remote terminal 730 may then determine whether to accept or reject the sidelink discontinuous reception mode configuration information received in step 733, and may transmit a message (or information) indicating acceptance or rejection to the sidelink relay 740.

According to another embodiment, if the base station 750 determines that a sidelink discontinuous reception mode needs to be configured between the remote terminal 730 and the sidelink relay 740 regardless of the sidelink transmission resource allocation mode of the sidelink relay 740, that is, including the case in which the sidelink transmission resource allocation mode is configured to be a mode (mode2) in which the sidelink relay 740 directly allocates a transmission resource, the base station 750 may configure the sidelink discontinuous reception mode configuration of the remote terminal 730 and may transmit an RRCReconfiguration message including the sidelink discontinuous reception mode configuration information to the sidelink relay 740.

The base station 750 may configure the sidelink discontinuous reception mode configuration information of the remote terminal 730, based on at least one of downlink traffic pattern information which the remote terminal 730 may receive from the network, Uu discontinuous reception mode configuration information of the sidelink relay 740, and a downlink traffic pattern/uplink traffic pattern which the sidelink relay 740 may receive from the network, or a combination thereof. The RRCReconfiguration message may include at least one of the sidelink source L2 ID of the remote terminal 730, the sidelink target L2 ID of the sidelink relay 740, the local identifier (remote terminal identification information which may be included in an adaptation layer header) of the remote terminal 730, and sidelink discontinuous reception mode configuration information of the remote terminal 730, or a combination thereof.

The sidelink relay 740 may transmit an RRCReconfigurationSidelink message including the sidelink discontinuous reception mode configuration information in the received RRCReconfiguration message to the remote terminal 730 in step 733. The remote terminal 730 may then determine whether to accept or reject the received sidelink discontinuous reception mode configuration information, and may transmit a message (or information) indicating acceptance or rejection to the sidelink relay 740.

In another embodiment, the remote terminal 730 may determine that there is no need to configure a sidelink discontinuous reception mode with the remote terminal 730, without having to transmit a UEAssistanceInformationSidelink message including preferred sidelink discontinuous reception mode configuration information to the sidelink relay 740. The sidelink relay 740 may transmit a SidelinkUEInformationNR message to the base station 750 regardless of the sidelink transmission resource allocation mode of the sidelink relay 740, that is, including the case in which the sidelink transmission resource allocation mode is configured to be a mode (mode2) in which the sidelink relay 740 directly allocates a transmission resource.

The SidelinkUEInformationNR message may include at least one of the sidelink target identifier (DST L2 ID) of the sidelink relay 740, the sidelink source identifier (SRC L2 ID) of the remote terminal 730, and the local identifier (remote terminal identification information which may be included in an adaptation layer header) of the remote terminal 730, or a combination thereof. In case that a sidelink discontinuous reception mode is configured with regard to the counterpart remote terminal which transmits/receives traffic with the remote terminal 730 through the sidelink relay 740, the sidelink relay 740 may transfer the sidelink discontinuous reception mode configuration information of the counterpart remote terminal such that the sidelink discontinuous reception mode configuration information preferred by the remote terminal 730 can match with the sidelink discontinuous reception mode of the counterpart remote terminal.

The base station 750 may configure sidelink discontinuous reception mode configuration information of the remote terminal 730 and the sidelink relay 740, may include this configuration information in an RRCReconfiguration message, and may transmit the message to the sidelink relay 740. The RRCReconfiguration message may include at least one of the sidelink target identifier (DST L2 ID) of the sidelink relay 740, the sidelink source identifier (SRC L2 ID) of the remote terminal 730, the local identifier (remote terminal identification information which may be included in an adaptation layer header) of the remote terminal 730, and sidelink discontinuous reception mode configuration information of the remote terminal 730, or a combination thereof.

The base station 750 may configure sidelink discontinuous reception mode configuration information, based on at least one of downlink traffic pattern information which the remote terminal 730 may receive from the network, Uu discontinuous reception mode configuration information of the sidelink relay 740, and a downlink traffic pattern/uplink traffic pattern which the sidelink relay 740 may receive from the network, or a combination thereof. Upon receiving sidelink discontinuous reception mode configuration information of the counterpart remote terminal of the remote terminal 730 through the sidelink relay 740, the base station 750 may also consider the sidelink discontinuous reception mode configuration information of the counterpart remote terminal. The sidelink relay 740 may acquire sidelink discontinuous reception mode configuration information from the RRCReconfiguration message received from the base station 750, may configure an RRCReconfigurationSidelink including this information, and may transfer the same to the remote terminal 730 in step 733. The remote terminal 730 may then determine whether to accept or reject the sidelink discontinuous reception mode configuration information received in step 733, and may transmit an acceptance or a rejection to the sidelink relay 740.

In another embodiment, the remote terminal 730 may transmit a UEAssistanceInformationSidelink message including preferred sidelink discontinuous reception mode configuration information to the sidelink relay 740 in step 731. The remote terminal 730 may include information of at least one of a preferred sidelink DRX cycle, a sidelink on-duration timer, a sidelink inactivity timer, and a sidelink start offset, or a combination thereof.

As an example, the remote terminal 730 may configure the preferred sidelink discontinuous reception mode configuration information, based on downlink traffic pattern information thereof. The sidelink relay 740 may configure sidelink discontinuous reception mode configuration information with the remote terminal 730. The sidelink relay 740 may configure sidelink discontinuous reception mode configuration information of the remote terminal 730, based on at least one of sidelink discontinuous reception mode configuration information preferred by the remote terminal 730 received in step 731, Uu discontinuous reception mode configuration information configured for the sidelink relay 740, sidelink discontinuous reception mode configuration information configured between the sidelink relay 740 and another remote terminal, a paging opportunity which the sidelink relay 740 in an RRC connected mode needs to monitor therefor or for another remote terminal connected thereto, and a paging cycle, or a combination thereof.

In case that a sidelink discontinuous reception mode is configured with regard to the counterpart remote terminal which transmits/receives traffic with the remote terminal 730 through the sidelink relay 740, the sidelink relay 740 may also consider the sidelink discontinuous reception mode configuration information of the counterpart remote terminal such that the sidelink discontinuous reception mode configuration of the remote terminal 730 can match with the sidelink discontinuous reception mode of the counterpart remote terminal. The sidelink relay 740 may configure a SidelinkUEInformationNR message including the sidelink discontinuous reception mode configuration information of the remote terminal 730 configured thereby and may transmit the SidelinkUEInformationNR message to the base station 750 also in case that the sidelink transmission resource allocation mode is configured to be a mode (mode2) in which the sidelink relay 740 needs to directly allocate a resource.

The SidelinkUEInformationNR message may include at least one of the sidelink target identifier (DST L2 ID) of the sidelink relay 740, the sidelink source identifier (SRC L2 ID) of the remote terminal 730, the local identifier (remote terminal identification information which may be included in an adaptation layer header) of the remote terminal 730, and the sidelink discontinuous reception mode configuration information configured by the sidelink relay 740, or a combination thereof. The base station 750 may identify the sidelink discontinuous reception mode configuration information of the remote terminal 730 configured by the sidelink relay 740, and may transmit an RRCReconfiguration message to the sidelink relay 740 as a message identifying the same.

If necessary, the base station 750 may correct the sidelink discontinuous reception mode configuration information of the remote terminal 730, may include the corrected sidelink discontinuous reception mode configuration information in an RRCReconfiguration message, and may transmit the message to the sidelink relay 740. The RRCReconfiguration message may include at least one of the sidelink target identifier (DST L2 ID) of the sidelink relay 740, the sidelink source identifier (SRC L2 ID) of the remote terminal 730, the local identifier (remote terminal identification information which may be included in an adaptation layer header) of the remote terminal 730, and identification/correction information regarding the sidelink discontinuous reception mode configuration information of the remote terminal 730, or a combination thereof. The base station 750 may identify and/or correct sidelink discontinuous reception mode configuration information, based on at least one of downlink traffic pattern information which the remote terminal 730 may receive from the network, Uu discontinuous reception mode configuration information of the sidelink relay 740, and a downlink traffic pattern/uplink traffic pattern which the sidelink relay 740 may receive from the network, or a combination thereof. The sidelink relay 740 may identify the sidelink discontinuous reception mode configuration information of the remote terminal 730, based on the RRCReconfiguration message received from the base station 750, may configure an RRCReconfigurationSidelink message including the sidelink discontinuous reception mode configuration information of the remote terminal 730, and may transmit the message to the remote terminal 730 in step 733. The remote terminal 730 may then determine whether to accept or reject the sidelink discontinuous reception mode configuration information received in step 733, and may transmit an acceptance or rejection to the sidelink relay 740.

FIG. 7C illustrates a discontinuous reception mode configuration procedure in connection with sidelink direct communication assuming that the remote terminal 760 is a transmitting terminal, and the sidelink relay 770 is a receiving terminal. FIG. 7C illustrates operations of the remote terminal 760 and the sidelink relay 770 for processing a sidelink discontinuous reception mode configuration in case that the remote terminal 760 maintains an RRC connected mode with the base station 780, and the sidelink relay 770 maintains an RRC connected mode with the base station 780.

Referring to FIG. 7C, the sidelink relay 770 may transmit a UEAssistanceInformationSidelink message including preferred sidelink discontinuous reception mode configuration information to the remote terminal 760 in step 761. The sidelink relay 770 may include information of at least one of a sidelink DRX cycle preferred in step 761, a sidelink on-duration timer, a sidelink inactivity timer, and a sidelink start offset, or a combination thereof. The sidelink relay 770 may configure the preferred sidelink discontinuous reception mode configuration information, based on at least one of Uu discontinuous reception mode configuration information configured therefor, sidelink discontinuous reception mode configuration information configured between the sidelink relay 770 and another remote terminal, a paging opportunity which the sidelink relay 770 in an RRC connected mode needs to monitor therefor or for another remote terminal connected thereto, and a paging cycle, or a combination thereof.

In case that a sidelink discontinuous reception mode is configured with regard to the counterpart remote terminal which transmits/receives traffic with the remote terminal 760 through the sidelink relay 770, the sidelink relay 770 may consider the sidelink discontinuous reception mode configuration information of the counterpart remote terminal such that the sidelink discontinuous reception mode configuration information of the remote terminal 760 can match with the sidelink discontinuous reception mode of the counterpart remote terminal.

The remote terminal 760 may configure sidelink discontinuous reception mode configuration information of the sidelink relay 770. As an example, the remote terminal 760 may configure preferred sidelink discontinuous reception mode configuration information, based on at least one of sidelink discontinuous reception mode configuration information preferred by the sidelink relay 770 received in step 761, and uplink traffic pattern information of the remote terminal 760, or a combination thereof. The remote terminal 760 may transmit an RRCReconfigurationSidelink message including the configured sidelink discontinuous reception mode configuration information to the sidelink relay 770 in step 763. The sidelink relay 770 may then determine whether to accept or reject the sidelink discontinuous reception mode configuration information received in step 763, and may transmit an acceptance or a rejection to the remote terminal 760.

According to another embodiment, if the base station 780 determines that a sidelink discontinuous reception mode needs to be configured between the remote terminal 760 and the sidelink relay 770 regardless of the sidelink transmission resource allocation mode of the remote terminal 760, that is, including the case in which the sidelink transmission resource allocation mode is configured to be a mode (mode2) in which the remote terminal 760 directly allocates a transmission resource, the base station 780 may configure the sidelink discontinuous reception mode configuration of the sidelink relay 770 and may transmit an RRCReconfiguration message including the sidelink discontinuous reception mode configuration information to the remote terminal 760.

The base station 780 may configure the sidelink discontinuous reception mode configuration information of the sidelink relay 770, based on at least one of uplink traffic pattern information of the remote terminal 760, Uu discontinuous reception mode configuration information of the sidelink relay 770, and uplink and downlink traffic pattern information of the sidelink relay 770, or a combination thereof. The RRCReconfiguration message may include at least one of the sidelink target L2 ID of the remote terminal 760, the sidelink source L2 ID of the sidelink relay 770, and sidelink discontinuous reception mode configuration information of the sidelink relay 770, or a combination thereof.

The RRCReconfiguration message may be transmitted to the remote terminal 760 through relay of the sidelink relay 770. The remote terminal 760 may transmit an RCReconfigurationSidelink including the sidelink discontinuous reception mode configuration information of the received RRCReconfiguration message to the sidelink relay 770 in step 763. The sidelink relay 770 may then determine whether to accept or reject the sidelink discontinuous reception mode configuration information received in step 763, and may transmit an acceptance or a rejection to the remote terminal 760.

In another embodiment, if the remote terminal 760 determines that a sidelink discontinuous reception mode needs to be configured with the sidelink relay 770, the remote terminal 760 may transmit a SidelinkUEInformationNR message to the base station 780 regardless of the sidelink transmission resource allocation mode of the remote terminal 760, that is, including the case in which the sidelink transmission resource allocation mode is configured to be a mode (mode2) in which the remote terminal 760 directly allocates a transmission resource.

The SidelinkUEInformationNR message may be transmitted to the base station 780 through relay transmission by the sidelink relay 770, and may include at least one of the sidelink source identifier (SRC L2 ID) of the sidelink relay 770, and the sidelink target identifier (DST L2 ID) of the remote terminal 760, or a combination thereof. The base station 780 may configure sidelink discontinuous reception mode configuration information of the remote terminal 760 and the sidelink relay 770, may include this configuration information in an RRCReconfiguration message, and may transmit the message to the remote terminal 760 by using relay transmission by the sidelink relay 770. The RRCReconfiguration message may include at least one of the sidelink source identifier (SRC L2 ID) of the sidelink relay 770, the sidelink target identifier (SRC L2 ID) of the remote terminal 760, and sidelink discontinuous reception mode configuration information of the sidelink relay 770, or a combination thereof. The base station 780 may configure sidelink discontinuous reception mode configuration information, based on at least one of uplink traffic pattern information of the remote terminal 760, Uu discontinuous reception mode configuration information of the sidelink relay 770, and uplink and downlink traffic pattern information of the sidelink relay 760, or a combination thereof. The remote terminal 760 may acquire sidelink discontinuous reception mode configuration information from the RRCReconfiguration message received from the base station 780, may configure an RRCReconfigurationSidelink including this information, and may transfer the message to the sidelink relay 770 in step 763. The sidelink relay 770 may then determine whether to accept or reject the sidelink discontinuous reception mode configuration information received in step 763, and may transmit an acceptance or a rejection to the remote terminal 760.

In another embodiment, the sidelink relay 770 may transmit a UEAssistanceInformationSidelink message including preferred sidelink discontinuous reception mode configuration information to the remote terminal 760 in step 761. The sidelink relay 770 may include information of at least one of a preferred sidelink DRX cycle, a sidelink on-duration timer, a sidelink inactivity timer, and a sidelink start offset, or a combination thereof. The sidelink relay 770 may configure the preferred sidelink discontinuous reception mode configuration information, based on at least one of Uu discontinuous reception mode configuration information configured therefor, sidelink discontinuous reception mode configuration information configured between the sidelink relay 770 and another remote terminal, a paging opportunity which the sidelink relay 770 in an RRC connected mode needs to monitor therefor or for another remote terminal connected thereto, and a paging cycle, or a combination thereof.

In case that a sidelink discontinuous reception mode is configured with regard to the counterpart remote terminal which transmits/receives traffic with the remote terminal 760 through the sidelink relay 770, the sidelink relay 770 may also consider the sidelink discontinuous reception mode configuration information of the counterpart remote terminal. The remote terminal 760 may configure the sidelink discontinuous reception mode configuration information of the sidelink relay 770. As an example, the remote terminal 760 may configure preferred sidelink discontinuous reception mode configuration information, based on at least one of the sidelink discontinuous reception mode configuration information preferred by the sidelink relay 770 received in step 761, and uplink traffic pattern information of the remote terminal 760. The remote terminal 760 may configure a SidelinkUEInformationNR message including the sidelink discontinuous reception mode configuration information of the sidelink relay 770 configured thereby and may transmit the SidelinkUEInformationNR message to the base station 780 also in case that the sidelink transmission resource allocation mode is configured to be a mode (mode2) in which the remote terminal 760 needs to directly allocate a resource. The SidelinkUEInformationNR message may include at least one of the sidelink source identifier (SRC L2 ID) of the sidelink relay 770, the sidelink target identifier (DST L2 ID) of the remote terminal 760, and the sidelink discontinuous reception mode configuration information of the sidelink relay 770 configured by the remote terminal 760, or a combination thereof.

The base station 780 may identify the sidelink discontinuous reception mode configuration information of the sidelink relay 770 configured by the remote terminal 760, and may transmit an RRCReconfiguration message to the remote terminal 760 as a message identifying the same. The RRCReconfiguration message may be transmitted to the remote terminal 760 through relay transmission by the sidelink relay 770.

If necessary, the base station 780 may correct the sidelink discontinuous reception mode configuration information of the sidelink relay 770, may include the corrected sidelink discontinuous reception mode configuration information in an RRCReconfiguration message, and may transmit the message to the remote terminal 760. The RRCReconfiguration message may include at least one of the sidelink source identifier (SRC L2 ID) of the sidelink relay 770, the sidelink target identifier (DST L2 ID) of the remote terminal 760, and identification/correction information regarding the sidelink discontinuous reception mode configuration information of the sidelink relay 770, or a combination thereof. The base station 780 may identify and/or correct sidelink discontinuous reception mode configuration information, based on at least one of uplink traffic pattern information of the remote terminal 760, Uu discontinuous reception mode configuration information of the sidelink relay 770, and uplink and downlink traffic pattern information of the sidelink relay 770, or a combination thereof.

The remote terminal 760 may identify the sidelink discontinuous reception mode configuration information of the sidelink relay 770, based on the RRCReconfiguration message received from the base station 780, may configure an RRCReconfigurationSidelink message including the sidelink discontinuous reception mode configuration information of the sidelink relay 770, and may transmit the message to the sidelink relay 770 in step 763. The sidelink relay 770 may then determine whether to accept or reject the sidelink discontinuous reception mode configuration information received in step 763, and may transmit a message (or information) indicating acceptance or rejection to the remote terminal 760.

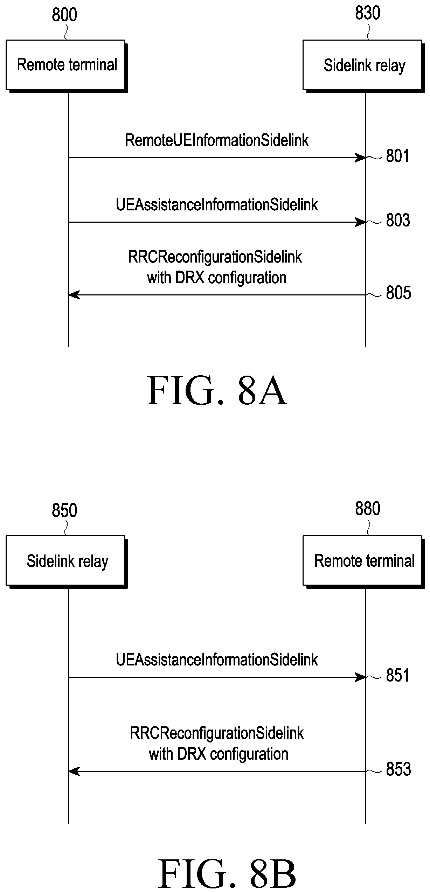

FIG. 8A and FIG. 8B illustrate a procedure in which a remote terminal and a sidelink relay configure a discontinuous reception mode according to an embodiment of the disclosure.

FIG. 8A and FIG. 8B illustrate operations of the remote terminal and the sidelink relay for performing a sidelink discontinuous reception mode configuration procedure in case that the remote terminal and the sidelink relay maintain one of an RRC idle mode or an RRC inactive mode with the base station.

FIG. 8A illustrates a case in which the remote terminal 800 plays the role of a receiving terminal, and the sidelink relay 830 plays the role of a transmitting terminal. FIG. 8B illustrates a case in which the remote terminal 880 plays the role of a transmitting terminal, and the sidelink relay 850 plays the role of a receiving terminal.

Referring to FIG. 8A, the remote terminal 800 may transmit/receive data with another remote terminal through sidelink direction communication with the sidelink relay 830, or may receive a paging message or a system information message transmitted from the network. In case that the remote terminal 800 in an RRC inactive mode or RRC idle mode can receive a paging message transmitted from the network, the remote terminal 800 may transmit a RemoteUEInformationSidelink message to the sidelink relay 830 in step 801 such that the sidelink relay 830 can determine the paging opportunity of the remote terminal 800 and the paging monitoring interval, thereby replaying a paging message to the remote terminal 800.

The RemoteUEInformationSidelink message may include at least one piece of information from among the RRC idle mode paging identifier of the remote terminal 800, the RRC inactive mode paging identifier, and the paging cycle of the remote terminal 800. If a sidelink discontinuous reception mode configuration is deemed necessary with regard to the sidelink direct communication between the remote terminal 800 and the sidelink relay 830, the remote terminal 800 corresponding to a receiving terminal may transmit a UEAssistanceInformationSidelink message to the sidelink relay 830 corresponding to a transmitting terminal in step 803.

The UEAssistanceInformationSidelink message may include information of at least one of a sidelink DRX cycle preferred by the remote terminal 800, a sidelink on-duration timer, a sidelink inactivity timer, and a sidelink start offset, or a combination thereof. the sidelink discontinuous reception mode configuration information preferred by the remote terminal 800 in step 803 may be configured based on the information of (2) in FIG. 6B.

For example, the preferred sidelink DRX cycle information in the UEAssistanceInformationSidelink message may be configured to be the paging cycle information of the remote terminal 800 included in the RemoteUEInformationSidelink message in step 801. For example, in case that the sidelink DRX cycle information preferred by the remote terminal 800 is configured to be the paging cycle information of the remote terminal 800, the preferred sidelink on-duration timer information/sidelink start offset information in the UEAssistanceInformationSidelink message may be configured to be any value preferred by the remote terminal 800.

As another example, in case that the sidelink DRX cycle information preferred by the remote terminal 800 is configured to be the paging cycle information of the remote terminal 800, the remote terminal 800 may transmit a UEAssistanceInformationSidelink message to the sidelink relay 830 without including the preferred sidelink on-duration timer information/sidelink start offset information in the UEAssistanceInformationSidelink message. The sidelink relay 830 may transmit the sidelink discontinuous reception mode configuration information with the remote terminal 800 to the remote terminal 800 in step 805.

The discontinuous reception mode configuration information of the sidelink relay 830 and the remote terminal 800 in step 805 may include at least one of a DRX on-duration timer, a DRX inactivity timer, a DRX HARQ RTT timer, a DRX retransmission Timer, a DRX cycle, a DRX start offset, and a DRX slot offset, or a combination thereof. When configuring the sidelink discontinuous reception mode configuration information with the remote terminal 800, the sidelink relay 830 may reference the paging cycle information in the RemoteUEInformationSidelink message in step 801 and/or the preferred DRX cycle/preferred on-duration timer/preferred start offset information in the UEAssistanceInformationSidelink message in step 803.

As an example, upon determining that the paging message needs to be monitored with regard to the remote terminal 800, the sidelink relay 830 may calculate the paging message monitoring interval (paging opportunity) of the remote terminal 800 by using paging cycle information in the RemoteUEInformationSidelink message in step 801, and may configure sidelink discontinuous reception mode configuration information with the remote terminal 800 such that the remote terminal 800 can perform a sidelink discontinuous reception mode active time operation with the sidelink relay 830. The sidelink discontinuous reception mode configuration information in step 805, configured by the sidelink relay 830, may be configured based on at least one of the following parameters of (1), (2), (3), (4), and (5) or a combination thereof.
(1) May be configured based on sidelink discontinuous reception mode configuration information already configured by the sidelink relay 830 with another remote terminal. This information may be used by the sidelink relay 830 to match the sidelink discontinuous reception mode of remote terminals connected thereto to the maximum extent, thereby minimizing battery consumption by the sidelink relay 830 and the remote terminal 800.
(2) May be configured based on information regarding a paging opportunity/paging cycle during which the sidelink relay 830 needs to perform paging monitoring/paging relay transmission of remote terminals (the remote terminal 800 and other remote terminals). This information may be used by the sidelink relay to match the interval during which the Uu link is monitored to identify paging of remote terminals connected thereto and the sidelink discontinuous reception mode to the maximum extent, thereby minimizing battery consumption by the sidelink relay 830 and the remote terminal 800.
(3) May be configured, in case that the remote terminal 800 performs traffic transmission/reception with another remote terminal through the sidelink relay 830, based on the sidelink discontinuous reception mode configuration between the sidelink relay 830 and the other remote terminal. The sidelink discontinuous reception mode configuration information with the other remote terminal may include at least one of a DRX on-duration timer, a DRX inactivity timer, a DRX HARQ RTT timer, a DRX retransmission timer, a DRX cycle, a DRX start offset, a DRX slot offset, or a combination thereof. This information may be used by the sidelink relay 830 to match the sidelink discontinuous reception mode configurations with the source remote terminal and the target remote terminal, respectively, mode to the maximum extent, thereby minimizing battery consumption by the sidelink relay 830 and the remote terminal 800.
(4) May be configured based on a paging opportunity/paging cycle to be used by the sidelink relay 830 in an RRC idle mode or RRC inactive mode to monitor the paging message of the sidelink relay 830. This information may be used by the sidelink relay to match the interval during which the Uu link is monitored to identify paging thereof and the sidelink discontinuous reception mode to the maximum extent, thereby minimizing battery consumption by the sidelink relay 830 and the remote terminal 800.
(5) May be configured based on the downlink traffic pattern or uplink traffic pattern of the sidelink relay 830. This information may be used by the sidelink relay to match the interval during which uplink traffic thereof is transmitted, or during which downlink traffic thereof is received, and the sidelink discontinuous reception mode to the maximum extent, thereby minimizing battery consumption by the sidelink relay 830 and the remote terminal 800.

The remote terminal 800 may then determine whether to accept or reject the sidelink discontinuous reception mode configuration information received in step 805, and may transmit an acceptance or a rejection to the sidelink relay 830.

In another embodiment, the sidelink relay 830 may calculate the paging message monitoring interval (paging opportunity) of the remote terminal 800 by using paging cycle information regarding the remote terminal 800 in the RemoteUEInformationSidelink message received from the remote terminal 800 in step 801, and may configure sidelink discontinuous reception mode configuration information with the remote terminal 800 such that the remote terminal 800 can perform a sidelink discontinuous reception mode active time operation with the sidelink relay 830.

The sidelink discontinuous reception mode configuration of the remote terminal 800, configured by the sidelink relay 830, may be configured based on at least one of the above parameters of (1), (2), (3), (4), and (5) or a combination thereof. The sidelink relay 830 may transmit an RRCReconfigurationSidelink message including sidelink discontinuous reception mode configuration information of the remote terminal 80 in step 805. The remote terminal 800 may then determine whether to accept or reject the sidelink discontinuous reception mode configuration information received in step 805, and may transmit an acceptance or a rejection to the sidelink relay 830.

Referring to FIG. 8B, the remote terminal 880 may transmit/receive data with another remote terminal through sidelink direction communication with the sidelink relay 850, or may receive a paging message or a system information message transmitted from the network. If a sidelink discontinuous reception mode configuration is deemed necessary with regard to the sidelink direct communication between the remote terminal 880 and the sidelink relay 850, the sidelink relay 850 corresponding to a receiving terminal may transmit a UEAssistanceInformationSidelink message to the remote terminal 880 corresponding to a transmitting terminal in step 851.

The UEAssistanceInformationSidelink message may include information of at least one of a sidelink DRX cycle preferred by the sidelink relay 850, a sidelink on-duration timer, a sidelink inactivity timer, and a sidelink start offset, or a combination thereof. The sidelink discontinuous reception mode configuration information preferred by the sidelink relay 850 in the UEAssistanceInformationSidelink message in step 851 may be configured based on at least one of the parameters of (2), (4), (5), (6), and (7) in FIG. 6A above, or a combination thereof. As an example, the sidelink relay 850 may configure preferred sidelink discontinuous reception mode configuration information, based on the paging opportunity/paging cycle during which the configured paging passage thereof is to be monitored. As an example, the sidelink relay 850 may configure preferred sidelink discontinuous reception mode configuration information, based on the paging opportunity/paging cycle regarding the paging message of remote terminals to be monitored thereby.

For example, in case that a sidelink discontinuous reception mode is configured with regard to the counterpart remote terminal which transmits/receives traffic with the remote terminal 880 through the sidelink relay 850, the sidelink relay 850 may configure preferred sidelink discontinuous reception mode configuration information in consideration of the sidelink discontinuous reception mode configuration information of the counterpart remote terminal. The remote terminal 880 may transmit the sidelink discontinuous reception mode configuration information with the sidelink relay 850 to the sidelink relay 850 in step 853.

The discontinuous reception mode configuration information of the sidelink relay 850 and the remote terminal 880 in step 853 may include at least one of a DRX on-duration timer, a DRX inactivity timer, a DRX HARQ RTT timer, a DRX retransmission Timer, a DRX cycle, a DRX start offset, and a DRX slot offset, or a combination thereof. As an example, the remote terminal 880 may configure the discontinuous reception mode configuration information in step 853, based on the preferred sidelink discontinuous reception mode configuration information provided by the sidelink relay 853 in step 851. As an example, in case that the remote terminal 880 transmits/receives data with a counterpart remote terminal through the sidelink relay 850, the remote terminal 880 may configure the sidelink discontinuous reception mode configuration information of the sidelink relay 850, based on sidelink traffic pattern information to be transmitted by the remote terminal 880. The sidelink relay 850 may then determine whether to accept or reject the sidelink discontinuous reception mode configuration information received in step 853, and may transmit a message (or information) indicating acceptance or rejection to the remote terminal 880.

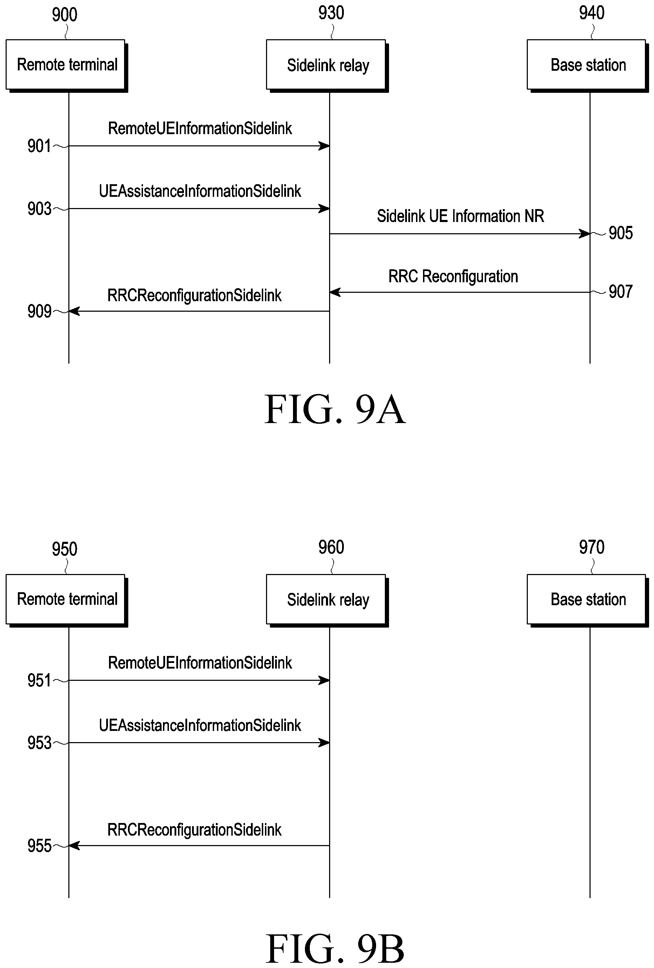

FIG. 9A and FIG. 9B illustrate a procedure in which a remote terminal and a sidelink relay configure a discontinuous reception mode according to an embodiment of the disclosure.

FIG. 9A illustrates a discontinuous reception mode configuration procedure in connection with sidelink direct communication assuming that the sidelink relay 930 is a transmitting terminal, and the remote terminal 900 is a receiving terminal. In case that the remote terminal 900 maintains one of an RRC idle mode or an RRC inactive mode with the base station 940, and the sidelink relay 930 maintains an RRC connected mode with regard to the base station 940, a mode (mode 1) in which the base station 940 configures a sidelink transmission resource for the sidelink relay 930 may be configured.

Referring to FIG. 9A, the remote terminal 900 may transmit/receive data with another remote terminal through sidelink direction communication with the sidelink relay 930, or may receive a paging message or a system information message transmitted from the network. In case that the remote terminal 900 in an RRC inactive mode or RRC idle mode can receive a paging message transmitted from the network, the remote terminal 900 may transmit a RemoteUEInformationSidelink message to the sidelink relay 930 in step 901 such that the sidelink relay 930 can determine the paging opportunity of the remote terminal 900 and the paging monitoring interval, thereby replaying a paging message to the remote terminal 900.

The RemoteUEInformationSidelink message may include at least one piece of information from among the RRC idle mode paging identifier of the remote terminal 900, the RRC inactive mode paging identifier, and the paging cycle of the remote terminal 900. If a sidelink discontinuous reception mode configuration is deemed necessary with regard to the sidelink direct communication between the remote terminal 900 and the sidelink relay 930, the remote terminal 900 corresponding to a receiving terminal may transmit a UEAssistanceInformationSidelink message to the sidelink relay 930 corresponding to a transmitting terminal in step 903.

The UEAssistanceInformationSidelink message may include information of at least one of a sidelink DRX cycle preferred by the remote terminal 900, a sidelink on-duration timer, a sidelink inactivity timer, and a sidelink start offset, or a combination thereof. The sidelink discontinuous reception mode configuration information preferred by the remote terminal 900 in step 903 may be configured based on the information of (2) in FIG. 6B. For example, the preferred sidelink DRX cycle information in the UEAssistanceInformationSidelink message may be configured to be the paging cycle information of the remote terminal 900 included in the RemoteUEInformationSidelink message in step 901. For example, in case that the sidelink DRX cycle information preferred by the remote terminal 900 is configured to be the paging cycle information of the remote terminal 900, the preferred sidelink on-duration timer information/sidelink start offset information in the UEAssistanceInformationSidelink message may be configured to be any value preferred by the remote terminal 900.

As another example, in case that the sidelink DRX cycle information preferred by the remote terminal 900 is configured to be the paging cycle information of the remote terminal 900, the remote terminal 900 may transmit a UEAssistanceInformationSidelink message to the sidelink relay 930 without including the preferred sidelink on-duration timer information/sidelink start offset information in the UEAssistanceInformationSidelink message.

The sidelink relay 930 may transmit the information received from the remote terminal 900 in step 901 and/or step 903 to the base station 940 in step 905. As an example, the sidelink relay 930 may configure a SidelinkUEInformationNR message by including at least one of the information in step 901 received from the remote terminal 900 and the information in step 903, or a combination thereof, in SL-DRX-InfoFromRX, and may transmit the same to the base station 940.

As another example, the sidelink relay 930 may compose a SidelinkUEInformationNR message including at least one of the information in step 901 received from the remote terminal 900, the paging opportunity of the remote terminal 900 determined by the sidelink relay 930, and the paging cycle of the remote terminal, or a combination thereof, and may transmit the message to the base station 940. The information configured by the sidelink relay 930 and transmitted to the base station 940 may be configured based on at least one of the paging cycle information in the RemoteUEInformationSidelink message in step 901 and/or the preferred DRX cycle in the UEAssistanceInformationSidelink in step 903, the preferred on-duration timer, preferred start offset information, the paging message monitoring interval (paging opportunity) of the remote terminal 900 calculated by using paging cycle information in the RemoteUEInformationSidelink message in step 901 if the sidelink relay 930 determines that the paging message needs to be monitored with regard to the remote terminal 900, the sidelink target identifier (DST L2 ID) of the sidelink relay 930, the sidelink source identifier (SRC L2 ID) of the remote terminal 900, and the following parameters of (1), (2), (3), (4), and (5), or a combination thereof.
(1) May be configured based on sidelink discontinuous reception mode configuration information already configured by the sidelink relay 930 with another remote terminal.
(2) May be configured based on information regarding a paging opportunity/paging cycle during which the sidelink relay 930 in an RRC connected mode needs to perform paging monitoring/paging relay transmission of remote terminals (the remote terminal 900 and other remote terminals).
(3) May be configured, in case that the remote terminal 900 performs traffic transmission/reception with another remote terminal through the sidelink relay 930, based on the sidelink discontinuous reception mode configuration between the sidelink relay 930 and the other remote terminal. The sidelink discontinuous reception mode configuration information with the other remote terminal may include at least one of a DRX on-duration timer, a DRX inactivity timer, a DRX HARQ RTT timer, a DRX retransmission timer, a DRX cycle, a DRX start offset, a DRX slot offset, or a combination thereof.
(4) May be configured based on the downlink traffic pattern or uplink traffic pattern of the sidelink relay 930.
(5) May be configured based on Uu discontinuous reception mode configuration information configured for the sidelink relay 930.

In case that the remote terminal 900 transmits a UEAssistanceInformationSidelink message in step 903, upon determining that sidelink on-duration timer/sidelink inactivity timer/sidelink start offset information is not included, the sidelink relay 930 may not include sidelink on-duration timer/sidelink inactivity timer/sidelink start offset information in the SidelinkUEInformationNR message transmitted in step 905, or may configure the sidelink on-duration timer/sidelink inactivity timer/sidelink start offset to be any value.

The base station 940 may configure sidelink discontinuous reception mode configuration information of the remote terminal 900 in consideration of information in the SidelinkUEInformationNR message transferred from the sidelink relay 930 and information grasped by the base station (for example, paging transmission interval, system message transmission interval, Uu discontinuous reception mode configuration information of the sidelink relay 930), and the like, and may transmit an RRCReconfiguration message including this message to the sidelink relay 930 in step 907.

The RRCReconfiguration message transmitted from the base station 940 to the sidelink relay 930 may include at least one of the sidelink target identifier (DST L2 ID) of the sidelink relay 930, the sidelink source identifier (SRC L2 ID) of the remote terminal 900, and sidelink discontinuous reception mode configuration information of the remote terminal 900, or a combination thereof. The discontinuous reception mode configuration information of the remote terminal 900 may include at least one of a DRX on-duration timer, a DRX inactivity timer, a DRX HARQ RTT timer, a DRX retransmission Timer, a DRX cycle, a DRX start offset, and a DRX slot offset, or a combination thereof. The sidelink relay 930 may compose an RRCReconfigurationSidelink message, based on the sidelink discontinuous reception mode configuration information of the remote terminal 900 acquired from the base station 940, and may transmit the same to the remote terminal 900 in step 909.

The remote terminal 900 may then determine whether to accept or reject the sidelink discontinuous reception mode configuration information received in step 909, and may transmit a message (or information) indicating acceptance or rejection to the sidelink relay 930.

In another embodiment, in case that the remote terminal 900 can receive a paging message transmitted from the network, the remote terminal 900 may transmit a RemoteUEInformationSidelink message to the sidelink relay 930 such that the sidelink relay 930 can determine the paging opportunity of the remote terminal 900 and the paging monitoring interval, thereby relaying the paging message to the remote terminal 900.

The RemoteUEInformationSidelink message may include at least one piece of information from among the RRC idle mode paging identifier of the remote terminal 900, the RRC inactive mode paging identifier, and the paging cycle of the remote terminal 900. If a sidelink discontinuous reception mode configuration is deemed necessary with regard to the sidelink direct communication between the remote terminal 900 and the sidelink relay 930, the sidelink relay 930 may compose a SidelinkUEInformationNR message including information received in step 901 from the remote terminal 900 and may transmit the same to the base station 940 in step 905.

The sidelink relay 930 may not include sidelink on-duration timer/sidelink inactivity timer/sidelink start offset information in the SidelinkUEInformationNR message transmitted in step 905, or may configure the sidelink on-duration timer/sidelink inactivity timer/sidelink start offset to be any value. As another example, the sidelink relay 930 may compose a SidelinkUEInformationNR message including at least one of the information in step 901 received from the remote terminal 900, the paging opportunity of the remote terminal 900 determined by the sidelink relay 930, and the paging cycle of the remote terminal 900, or a combination thereof, and may transmit the message to the base station 940. The information transmitted from the sidelink relay 930 to the base station 940 may be configured based on at least one of the paging cycle information in the RemoteUEInformationSidelink message in step 901, the paging message monitoring interval (paging opportunity) of the remote terminal 900 calculated by using paging cycle information in the RemoteUEInformationSidelink message in step 901 if the sidelink relay 930 determines that the paging message needs to be monitored with regard to the remote terminal 900, the sidelink target identifier (DST L2 ID) of the sidelink relay 930, the sidelink source identifier (SRC L2 ID) of the remote terminal 900, and the following parameters of (1), (2), (3), (4), and (5), or a combination thereof.
(1) May be configured based on sidelink discontinuous reception mode configuration information already configured by the sidelink relay 930 with another remote terminal.
(2) May be configured based on information regarding a paging opportunity/paging cycle during which the sidelink relay 930 in an RRC connected mode needs to perform paging monitoring/paging relay transmission of remote terminals (the remote terminal 900 and other remote terminals).
(3) May be configured, in case that the remote terminal 900 performs traffic transmission/reception with another remote terminal through the sidelink relay 930, based on the sidelink discontinuous reception mode configuration between the sidelink relay 930 and the other remote terminal. The sidelink discontinuous reception mode configuration information with the other remote terminal may include at least one of a DRX on-duration timer, a DRX inactivity timer, a DRX HARQ RTT timer, a DRX retransmission timer, a DRX cycle, a DRX start offset, a DRX slot offset, or a combination thereof.
(4) May be configured based on the downlink traffic pattern or uplink traffic pattern of the sidelink relay 930.
(5) May be configured based on Uu discontinuous reception mode configuration information configured for the sidelink relay 930.

The sidelink relay 930 may not include sidelink on-duration timer/sidelink inactivity timer/sidelink start offset information in the SidelinkUEInformationNR message transmitted in step 905, or may configure the sidelink on-duration timer/sidelink inactivity timer/sidelink start offset to be any value.

The base station 940 may configure sidelink discontinuous reception mode configuration information of the remote terminal 900 in consideration of information in the SidelinkUEInformationNR message transferred from the sidelink relay 930 and information grasped by the base station (for example, paging transmission interval, system message transmission interval, Uu discontinuous reception mode configuration information of the sidelink relay), and the like, and may transmit an RRCReconfiguration message including this message to the sidelink relay 930. The RRCReconfiguration message transmitted from the base station 940 to the sidelink relay 930 may include at least one of the sidelink target identifier (DST L2 ID) of the sidelink relay 930, the sidelink source identifier (SRC L2 ID) of the remote terminal 900, and sidelink discontinuous reception mode configuration information of the remote terminal 900, or a combination thereof.

The discontinuous reception mode configuration information of the remote terminal 900 may include at least one of a DRX on-duration timer, a DRX inactivity timer, a DRX HARQ RTT timer, a DRX retransmission Timer, a DRX cycle, a DRX start offset, and a DRX slot offset, or a combination thereof. The sidelink relay 930 may compose an RRCReconfigurationSidelink message, based on the sidelink discontinuous reception mode configuration information of the remote terminal 900 acquired from the base station 940, and may transmit the same to the remote terminal 900 in step 909. The remote terminal 900 may then determine whether to accept or reject the sidelink discontinuous reception mode configuration information received in step 909, and may transmit a message (or information) indicating acceptance or rejection to the sidelink relay 930.

In another embodiment, in case that the base station 940 has information such as the paging opportunity of the remote terminal 900 and the paging cycle, it may be determined that the base station 940 needs to configure sidelink discontinuous reception mode configuration information of the remote terminal 900 connected to the sidelink relay 930. The base station 940 may acquire paging opportunity/paging cycle information of the remote terminal 900 through the SidelinkUEInformationSidelink message in step 905 transmitted by the sidelink relay 930.

The sidelink relay 930 may not include sidelink on-duration timer/sidelink inactivity timer/sidelink start offset information in the SidelinkUEInformationNR message transmitted in step 905, or may configure the sidelink on-duration timer/sidelink inactivity timer/sidelink start offset to be any value. The base station 940 may configure sidelink discontinuous reception mode configuration information of the remote terminal 900 by utilizing information of at least one of the paging opportunity of the remote terminal 900, the paging cycle, Uu discontinuous reception mode configuration information configured with regard to the sidelink relay 930, the uplink traffic pattern of the sidelink relay 930, the downlink traffic pattern of the sidelink relay 930, the sidelink target identifier (DST L2 ID) of the sidelink relay 930, and the sidelink source identifier (SRC L2 ID) of the remote terminal 900, or a combination thereof, and may transmit this information to the sidelink relay 930 in step 907.

The sidelink relay 930 may transmit an RRCReconfigurationSidelink message including the sidelink discontinuous reception mode configuration information of the remote terminal 900 transferred from the base station 940 to the remote terminal 900 in step 909. The remote terminal 900 may then determine whether to accept or reject the sidelink discontinuous reception mode configuration information received in step 909, and may transmit a message (or information) indicating acceptance or rejection to the sidelink relay 930.

FIG. 9B illustrates a discontinuous reception mode configuration procedure in connection with sidelink direct communication assuming that the sidelink relay 960 is a transmitting terminal, and the remote terminal 950 is a receiving terminal. In case that the remote terminal 950 maintains one of an RRC idle mode or an RRC inactive mode with the base station 970, and the sidelink relay 960 maintains an RRC connected mode with regard to the base station 970, a mode (mode 2) in which the sidelink relay 960 directly allocates a sidelink transmission resource may be configured.

Referring to FIG. 9B, the remote terminal 950 may transmit/receive data with another remote terminal through sidelink direction communication with the sidelink relay 960, or may receive a paging message or a system information message transmitted from the network. In case that the remote terminal 950 in an RRC inactive mode or RRC idle mode can receive a paging message transmitted from the network, the remote terminal 950 may transmit a RemoteUEInformationSidelink message to the sidelink relay 960 in step 951 such that the sidelink relay 960 can determine the paging opportunity of the remote terminal 950 and the paging monitoring interval, thereby replaying a paging message to the remote terminal 950.

The RemoteUEInformationSidelink message may include at least one piece of information from among the RRC idle mode paging identifier of the remote terminal 950, the RRC inactive mode paging identifier, and the paging cycle of the remote terminal 950. If a sidelink discontinuous reception mode configuration is deemed necessary with regard to the sidelink direct communication between the remote terminal 950 and the sidelink relay 960, the remote terminal 950 corresponding to a receiving terminal may transmit a UEAssistanceInformationSidelink message to the sidelink relay 960 corresponding to a transmitting terminal in step 953.

The UEAssistanceInformationSidelink message may include information of at least one of a sidelink DRX cycle preferred by the remote terminal 950, a sidelink on-duration timer, a sidelink inactivity timer, and a sidelink start offset, or a combination thereof. The sidelink discontinuous reception mode configuration information preferred by the remote terminal 950 in step 953 may be configured based on the information of (2) in FIG. 6B.

For example, the preferred sidelink DRX cycle information in the UEAssistanceInformationSidelink message may be configured to be the paging cycle information of the remote terminal 950 included in the RemoteUEInformationSidelink message in step 951. For example, in case that the sidelink DRX cycle information preferred by the remote terminal 950 is configured to be the paging cycle information of the remote terminal 950, the preferred sidelink on-duration timer information/sidelink start offset information in the UEAssistanceInformationSidelink message may be configured to be any value preferred by the remote terminal 950.

As another example, in case that the sidelink DRX cycle information preferred by the remote terminal 950 is configured to be the paging cycle information of the remote terminal 950, the remote terminal 950 may transmit a UEAssistanceInformationSidelink message to the sidelink relay 960 without including the preferred sidelink on-duration timer information/sidelink start offset information in the UEAssistanceInformationSidelink message. The sidelink relay 960 may configure sidelink discontinuous reception mode configuration information of the remote terminal 950, based on the information received in step 901 and/or step 903 from the remote terminal 950.

Upon determining that the paging message needs to be monitored with regard to the remote terminal 950, the sidelink relay 960 may configure sidelink discontinuous reception mode configuration information of the remote terminal 950, based on at least one of the paging message monitoring interval (paging opportunity) of the remote terminal 950 calculated by using paging cycle information in the RemoteUEInformationSidelink message in step 951, and the following parameters of (1), (2), (3), (4), and (5), or a combination thereof.
(1) May be configured based on sidelink discontinuous reception mode configuration information already configured by the sidelink relay 960 with another remote terminal.
(2) May be configured based on information regarding a paging opportunity/paging cycle during which the sidelink relay 960 in an RRC connected mode needs to perform paging monitoring/paging relay transmission of remote terminals (the remote terminal 950 and other remote terminals).
(3) May be configured, in case that the remote terminal 950 performs traffic transmission/reception with another remote terminal through the sidelink relay 960, based on the sidelink discontinuous reception mode configuration between the sidelink relay 960 and the other remote terminal. The sidelink discontinuous reception mode configuration information with the other remote terminal may include at least one of a DRX on-duration timer, a DRX inactivity timer, a DRX HARQ RTT timer, a DRX retransmission timer, a DRX cycle, a DRX start offset, a DRX slot offset, or a combination thereof.
(4) May be configured based on the downlink traffic pattern or uplink traffic pattern of the sidelink relay 960.
(5) May be configured based on Uu discontinuous reception mode configuration information configured for the sidelink relay 960.

The sidelink relay 960 may transmit an RRCReconfigurationSidelink message including the sidelink discontinuous reception mode configuration information of the remote terminal 950 in step 955. The sidelink discontinuous reception mode configuration information of the remote terminal 950 may include at least one of a DRX on-duration timer, a DRX inactivity timer, a DRX HARQ RTT timer, a DRX retransmission timer, a DRX cycle, a DRX start offset, and a DRX slot offset, or a combination thereof. The remote terminal 950 may then determine whether to accept or reject the sidelink discontinuous reception mode configuration information received in step 955, and may transmit a message (or information) indicating acceptance or rejection to the sidelink relay 950.

In another embodiment, the remote terminal 950 may transmit/receive data with another remote terminal through sidelink direction communication with the sidelink relay 960, or may receive a paging message or a system information message transmitted from the network. In case that the remote terminal 950 in an RRC inactive mode or RRC idle mode can receive a paging message transmitted from the network, the remote terminal 950 may transmit a RemoteUEInformationSidelink message to the sidelink relay 960 in step 951 such that the sidelink relay 960 can determine the paging opportunity of the remote terminal 950 and the paging monitoring interval, thereby replaying a paging message to the remote terminal 950.

The RemoteUEInformationSidelink message may include at least one piece of information from among the RRC idle mode paging identifier of the remote terminal 950, the RRC inactive mode paging identifier, and the paging cycle of the remote terminal 950. If a sidelink discontinuous reception mode configuration is deemed necessary with regard to the sidelink direct communication between the remote terminal 950 and the sidelink relay 960, the remote terminal 950 corresponding to a receiving terminal may transmit a UEAssistanceInformationSidelink message to the sidelink relay 960 corresponding to a transmitting terminal. The UEAssistanceInformationSidelink message may include information of at least one of a sidelink DRX cycle preferred by the remote terminal 950, a sidelink on-duration timer, a sidelink inactivity timer, and a sidelink start offset, or a combination thereof.

The sidelink discontinuous reception mode configuration information preferred by the remote terminal 950 in step 953 may be configured based on the information of (2) in FIG. 6B. For example, the preferred sidelink DRX cycle information in the UEAssistanceInformationSidelink message may be configured to be the paging cycle information of the remote terminal 950 included in the RemoteUEInformationSidelink message in step 951. For example, in case that the sidelink DRX cycle information preferred by the remote terminal 950 is configured to be the paging cycle information of the remote terminal 950, the preferred sidelink on-duration timer information/sidelink start offset information in the UEAssistanceInformationSidelink message may be configured to be any value preferred by the remote terminal 950.

As another example, in case that the sidelink DRX cycle information preferred by the remote terminal 950 is configured to be the paging cycle information of the remote terminal 950, the remote terminal 950 may transmit a UEAssistanceInformationSidelink message to the sidelink relay 960 without including the preferred sidelink on-duration timer information/sidelink start offset information in the UEAssistanceInformationSidelink message. The sidelink relay 960 may transmit the information received in step 951 and/or step 953 from the remote terminal 950 to the base station 970.

As an example, the sidelink relay 960 configure a SidelinkUEInformationNR message by including at least one of the information in step 951 received from the remote terminal 950 and the information in step 953, or a combination thereof, in SL-DRX-InfoFromRX, and may transmit the same to the base station 970. As another example, the sidelink relay 960 may compose a SidelinkUEInformationNR message including at least one of the information in step 951 received from the remote terminal 950, the information in step 953, the paging opportunity of the remote terminal 950 determined by the sidelink relay 960, and the paging cycle of the remote terminal, or a combination thereof, and may transmit the message to the base station 970. The information configured by the sidelink relay 960 and transmitted to the base station 970 may be configured based on at least one of the paging cycle information in the RemoteUEInformationSidelink message in step 951 and/or the preferred DRX cycle in the UEAssistanceInformationSidelink in step 953, the preferred on-duration timer, preferred start offset information, the paging message monitoring interval (paging opportunity) of the remote terminal 950 calculated by using paging cycle information in the RemoteUEInformationSidelink message in step 951 if the sidelink relay 960 determines that the paging message needs to be monitored with regard to the remote terminal 950, the sidelink target identifier (DST L2 ID) of the sidelink relay 960, the sidelink source identifier (SRC L2 ID) of the remote terminal 950, and the following parameters of (1), (2), (3), (4), and (5), or a combination thereof.
(1) May be configured based on sidelink discontinuous reception mode configuration information already configured by the sidelink relay 960 with another remote terminal.
(2) May be configured based on information regarding a paging opportunity/paging cycle during which the sidelink relay 960 in an RRC connected mode needs to perform paging monitoring/paging relay transmission of remote terminals (the remote terminal 950 and other remote terminals).
(3) May be configured, in case that the remote terminal 950 performs traffic transmission/reception with another remote terminal through the sidelink relay 960, based on the sidelink discontinuous reception mode configuration between the sidelink relay 960 and the other remote terminal. The sidelink discontinuous reception mode configuration information with the other remote terminal may include at least one of a DRX on-duration timer, a DRX inactivity timer, a DRX HARQ RTT timer, a DRX retransmission timer, a DRX cycle, a DRX start offset, a DRX slot offset, or a combination thereof.
(4) May be configured based on the downlink traffic pattern or uplink traffic pattern of the sidelink relay 960.
(5) May be configured based on Uu discontinuous reception mode configuration information configured for the sidelink relay 960.

In case that the remote terminal 950 transmits a UEAssistanceInformationSidelink message in step 953, upon determining that sidelink on-duration timer/sidelink inactivity timer/sidelink start offset information is not included, the sidelink relay 960 may not include sidelink on-duration timer/sidelink inactivity timer/sidelink start offset information in the SidelinkUEInformationNR message transmitted to the base station 970, or may configure the sidelink on-duration timer/sidelink inactivity timer/sidelink start offset to be any value. The base station 970 may configure sidelink discontinuous reception mode configuration information of the remote terminal 950 in consideration of information in the SidelinkUEInformationNR message transferred from the sidelink relay 960 and information grasped by the base station (for example, paging transmission interval, system message transmission interval, Uu discontinuous reception mode configuration information of the sidelink relay 960), and the like, and may transmit an RRCReconfiguration message including this message to the sidelink relay 960. The RRCReconfiguration message transmitted from the base station 970 to the sidelink relay 960 may include at least one of the sidelink target identifier (DST L2 ID) of the sidelink relay 960, the sidelink source identifier (SRC L2 ID) of the remote terminal 950, and sidelink discontinuous reception mode configuration information of the remote terminal 950, or a combination thereof. The discontinuous reception mode configuration information of the remote terminal 950 may include at least one of a DRX on-duration timer, a DRX inactivity timer, a DRX HARQ RTT timer, a DRX retransmission Timer, a DRX cycle, a DRX start offset, and a DRX slot offset, or a combination thereof. The sidelink relay 960 may compose an RRCReconfigurationSidelink message, based on the sidelink discontinuous reception mode configuration information of the remote terminal 950 acquired from the base station 970, and may transmit the same to the remote terminal 950 in step 955. The remote terminal 950 may then determine whether to accept or reject the sidelink discontinuous reception mode configuration information received in step 955, and may transmit an acceptance or a rejection to the sidelink relay 960.

In another embodiment, in case that the remote terminal 950 can receive a paging message transmitted from the network, the remote terminal 950 may transmit a RemoteUEInformationSidelink message to the sidelink relay 960 in step 951 such that the sidelink relay 960 can determine the paging opportunity of the remote terminal 950 and the paging monitoring interval, thereby relaying the paging message to the remote terminal 950. The RemoteUEInformationSidelink message may include at least one piece of information from among the RRC idle mode paging identifier of the remote terminal 950, the RRC inactive mode paging identifier, and the paging cycle of the remote terminal 950. If a sidelink discontinuous reception mode configuration is deemed necessary with regard to the sidelink direct communication between the remote terminal 950 and the sidelink relay 960, the sidelink relay 960 may configure sidelink discontinuous reception mode configuration information of the remote terminal 950, based on at least one of the paging message monitoring interval (paging opportunity) of the remote terminal 950 calculated by using paging cycle information in the RemoteUEInformationSidelink message in step 951, and the following parameters of (1), (2), (3), (4), and (5) or a combination thereof.
(1) May be configured based on sidelink discontinuous reception mode configuration information already configured by the sidelink relay 960 with another remote terminal.
(2) May be configured based on information regarding a paging opportunity/paging cycle during which the sidelink relay 960 in an RRC connected mode needs to perform paging monitoring/paging relay transmission of remote terminals (the remote terminal 900 and other remote terminals).
(3) May be configured, in case that the remote terminal 950 performs traffic transmission/reception with another remote terminal through the sidelink relay 960, based on the sidelink discontinuous reception mode configuration between the sidelink relay 960 and the other remote terminal. The sidelink discontinuous reception mode configuration information with the other remote terminal may include at least one of a DRX on-duration timer, a DRX inactivity timer, a DRX HARQ RTT timer, a DRX retransmission timer, a DRX cycle, a DRX start offset, a DRX slot offset, or a combination thereof.
(4) May be configured based on the downlink traffic pattern or uplink traffic pattern of the sidelink relay 960.
(5) May be configured based on Uu discontinuous reception mode configuration information configured for the sidelink relay 960.

The sidelink relay 960 may transmit an RRCReconfigurationSidelink message including discontinuous reception mode configuration information of the remote terminal 950 in step 955. The discontinuous reception mode configuration information of the remote terminal 950 may include at least one of a DRX on-duration timer, a DRX inactivity timer, a DRX HARQ RTT timer, a DRX retransmission Timer, a DRX cycle, a DRX start offset, and a DRX slot offset, or a combination thereof. The remote terminal 950 may then determine whether to accept or reject the sidelink discontinuous reception mode configuration information received in step 955, and may transmit a message (or information) indicating acceptance or rejection to the sidelink relay 960.

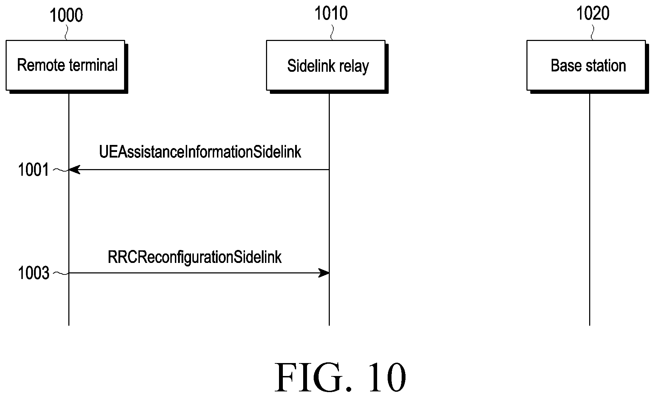

FIG. 10 illustrates a procedure in which a remote terminal and a sidelink relay configure a discontinuous reception mode according to an embodiment of the disclosure.

FIG. 10 illustrates a discontinuous reception mode configuration procedure in connection with sidelink direct communication assuming that the remote terminal 1000 is a transmitting terminal, and the sidelink relay 1010 is a receiving terminal. The procedure may be applied to a case in which the remote terminal 1000 maintains one of an RRC idle mode or an RRC inactive mode with the base station 1020, and the sidelink relay 1010 maintains an RRC connected mode with the base station 1020.

Referring to FIG. 10, the sidelink relay 1010 maintains an RRC connected mode in which data transmission/reception with the base station 1020 is performed, and the remote terminal 1000 maintains an RRC idle mode or an RRC inactive mode. The sidelink relay 1010 may transmit a UEAssistanceInformationSidelink message including preferred sidelink discontinuous reception mode configuration information to the remote terminal 1000 in step 1001.

The sidelink relay 1010 may include information of at least one of a preferred sidelink DRX cycle, a sidelink on-duration timer, a sidelink inactivity timer, and a sidelink start offset, or a combination thereof, in step 1001. The sidelink relay 1010 may configure sidelink discontinuous reception mode configuration information which is preferred as a value such that, for example, the Uu monitoring interval of the sidelink relay 1010 and the sidelink monitoring interval can match to the maximum extent, and battery consumption by the sidelink relay 1010 can be minimized, based on at least one of Uu discontinuous reception mode configuration information configured for the sidelink relay 1010, sidelink discontinuous reception mode configuration information configured between the sidelink relay 1010 and another remote terminal, a paging opportunity which the sidelink relay 1010 in an RRC connected mode needs to monitor therefor or for other remote terminals connected thereto, and a paging cycle, or a combination thereof.

In case that a sidelink discontinuous reception mode is configured with regard to the counterpart remote terminal which transmits/receives traffic with the remote terminal 1000 through the sidelink relay 1010, the sidelink relay 1010 may consider the sidelink discontinuous reception mode configuration information of the counterpart remote terminal such that the sidelink discontinuous reception mode configuration information of the remote terminal 1000 can match with the sidelink discontinuous reception mode of the counterpart remote terminal.

The remote terminal 1000 may configure sidelink discontinuous reception mode configuration information of the sidelink relay 1010. As an example, the remote terminal 1000 may configure sidelink discontinuous reception mode configuration information of the sidelink relay 1010, based on sidelink discontinuous reception mode configuration information preferred by the sidelink relay 1010 received in step 1001. As an example, in case that the remote terminal 1000 performs data transmission/reception with the counterpart remote terminal through direction connection to the sidelink relay 1010, sidelink discontinuous reception mode configuration information of the sidelink relay 1010 may be configured based on traffic pattern information transmitted by the remote terminal 1000. The remote terminal 1000 may transmit an RRCReconfigurationSidelink message including the configured sidelink discontinuous reception mode configuration information to the sidelink relay 1010 in step 1003. The sidelink relay 1010 may then determine whether to accept or reject the sidelink discontinuous reception mode configuration information received in step 1003, and may transmit a message (or information) indicating acceptance or rejection to the remote terminal 1000.

According to an embodiment of the disclosure, in case that the remote terminal performs packet transmission/reception with the network through relay transmission by the sidelink relay, the remote terminal may be connected to the network through the sidelink relay or directly connected to the network (or base station).

According to an embodiment, in case that the remote terminal which has been indirectly connected to the network (or base station) through the sidelink relay is directly connected to the network (base station) (that is, in case that the remote terminal performs an indirect-to-direct path switch), the remote terminal and/or the sidelink relay may receive the remote terminal's path switch indication message from the base station. In case that a sidelink discontinuous reception mode is configured between the remote terminal and the sidelink relay, if the remote terminal and/or the sidelink relay receives the remote terminal's path switch indication message from the base station, the remote terminal and the sidelink relay may release the sidelink discontinuous reception mode configuration. That is, an operation may be performed such that the sidelink discontinuous reception mode configuration of the remote terminal and/or the sidelink relay is released, and the timer included in the sidelink discontinuous reception mode configuration is stopped.

According to an embodiment, a remote terminal which has been directly connected to the base station may select a sidelink relay in an RRC idle mode or RRC inactive mode as a target relay, thereby performing a direct-to-indirect path switch. If the remote terminal has been performing a sidelink discontinuous reception mode operation after configuring a sidelink discontinuous reception mode with the sidelink relay in an RRC idle mode or RRC inactive mode, which has been selected as a target relay, the remote terminal may transmit an RRCReconfigurationComplete message to the base station through the sidelink relay in an RRC idle mode or RRC inactive mode, which has been selected as a target relay, so as to inform that the path switch procedure has been completed. After the message transmission (or if error-free transmission of the RRCReconfigurationComplete message is confirmed), the remote terminal may release the sidelink discontinuous reception mode configuration with the sidelink relay, which has been performed prior to the path switch procedure, and may stop the relevant timer.

The remote terminal may perform a sidelink discontinuous reception mode configuration operation in the RRC connected mode with the sidelink relay selected as a target relay by using at least one of the procedures in FIG. 6A, FIG. 6B, FIG. 7A, FIG. 7B, FIG. 7C, FIG. 9A, and FIG. 9B, and may configure a discontinuous reception mode with the sidelink relay.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Moreover, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method for operating a sidelink relay in a wireless communication system, the method comprising:
receiving a first message comprising assistance information regarding a sidelink DRX between the sidelink relay and a terminal from the terminal; and
transmitting a second message comprising configuration information regarding the sidelink DRX to the terminal,
wherein the assistance information included in the first message comprises at least one of a sidelink DRX cycle preferred by the terminal, sidelink timer information, and a sidelink start offset.

2. The method of claim 1, wherein the configuration information included in the second message comprises at least one of a DRX on-duration timer, a DRX inactivity timer, a DRX HARQ RTT timer, a DRX retransmission timer, a sidelink DRX cycle, a DRX start offset, and a DRX slot offset.

3. The method of claim 2, further comprising receiving a third message indicating acceptance or rejection regarding the configuration information included in the second message from the terminal.

4. The method of claim 1, further comprising:
in case that the sidelink relay and the terminal are radio resource control (RRC) connected to a base station, transmitting a fourth message comprising at least one of the assistance information, a sidelink target identifier (DST L2 ID) of the sidelink relay, a sidelink source identifier (SRC L2 ID) of the terminal, and a local identifier of the terminal to the base station; and
receiving a fifth message comprising the configuration information regarding the sidelink DRX from the base station.

5. The method of claim 1, further comprising, in case that the terminal is in an RRC idle mode, receiving a sixth message comprising at least one of an RRC idle mode paging identifier of the terminal and a paging cycle of the terminal from the terminal.

6. The method of claim 1, further comprising, in case that the terminal is in an RRC inactive mode, receiving a seventh message comprising at least one of an RRC inactive mode paging identifier of the terminal and a paging cycle of the terminal from the terminal.

7. A method for operating a terminal in a wireless communication system, the method comprising:
transmitting a first message comprising assistance information regarding a sidelink DRX between the terminal and a sidelink relay to the sidelink relay; and
receiving a second message comprising configuration information regarding the sidelink DRX from the sidelink relay,
wherein the assistance information included in the first message comprises at least one of a sidelink DRX cycle preferred by the terminal, sidelink timer information, and a sidelink start offset.

8. The method of claim 7, wherein the configuration information included in the second message comprises at least one of a DRX on-duration timer, a DRX inactivity timer, a DRX HARQ RTT timer, a DRX retransmission timer, a sidelink DRX cycle, a DRX start offset, and a DRX slot offset.

9. The method of claim 8, further comprising transmitting a third message indicating acceptance or rejection regarding the configuration information included in the second message to the sidelink relay.

10. The method of claim 7, further comprising, in case that the terminal is in an RRC idle mode, transmitting a sixth message comprising at least one of an RRC idle mode paging identifier of the terminal and a paging cycle of the terminal to the sidelink relay.

11. The method of claim 7, further comprising, in case that the terminal is in an RRC inactive mode, transmitting a seventh message comprising at least one of an RRC inactive mode paging identifier of the terminal and a paging cycle of the terminal to the sidelink relay.

12. A sidelink relay in a wireless communication system, the sidelink relay comprising:
a communication unit; and
a controller,
wherein the controller is configured to:
control a first message comprising assistance information regarding a sidelink DRX between the sidelink relay and a terminal to be received from the terminal; and
control a second message comprising configuration information regarding the sidelink DRX to be transmitted to the terminal, and
wherein the assistance information included in the first message comprises at least one of a sidelink DRX cycle preferred by the terminal, sidelink timer information, and a sidelink start offset.

13. The sidelink relay of claim 12, wherein the configuration information included in the second message comprises at least one of a DRX on-duration timer, a DRX inactivity timer, a DRX HARQ RTT timer, a DRX retransmission timer, a sidelink DRX cycle, a DRX start offset, and a DRX slot offset.

14. A terminal in a wireless communication system, the terminal comprising:
a communication unit; and
a controller,
wherein the controller is configured to:
control a first message comprising assistance information regarding a sidelink DRX between the terminal and a sidelink relay to be transmitted to the sidelink relay; and
control a second message comprising configuration information regarding the sidelink DRX to be received from the sidelink relay, and
wherein the assistance information included in the first message comprises at least one of a sidelink DRX cycle preferred by the terminal, sidelink timer information, and a sidelink start offset.

15. The terminal of claim 14, wherein the configuration information included in the second message comprises at least one of a DRX on-duration timer, a DRX inactivity timer, a DRX HARQ RTT timer, a DRX retransmission timer, a sidelink DRX cycle, a DRX start offset, and a DRX slot offset.
